(19) Europäisches Patentamt

European Patent Office

Office européen des brevets

(11) **EP 4 392 318 B1**

(12) **EUROPÄISCHE PATENTSCHRIFT**

(45) Veröffentlichungstag und Bekanntmachung des Hinweises auf die Patenterteilung:
**17.12.2025   Patentblatt 2025/51**

(21) Anmeldenummer: **22761506.9**

(22) Anmeldetag: **04.08.2022**

(51) Internationale Patentklassifikation (IPC):
***B62M 6/45*** *(2010.01)*

(52) Gemeinsame Patentklassifikation (CPC):
**B62M 6/45**; B62M 6/55

(86) Internationale Anmeldenummer:
**PCT/EP2022/071942**

(87) Internationale Veröffentlichungsnummer:
**WO 2023/025563 (02.03.2023 Gazette 2023/09)**

(54) **STEUERSYSTEM FÜR EIN ELEKTRISCHES FAHRRAD**

CONTROL SYSTEM FOR AN ELECTRIC BICYCLE

SYSTÈME DE COMMANDE POUR BICYCLETTE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.08.2021   DE 102021209317**
**06.05.2022   DE 102022204483**

(43) Veröffentlichungstag der Anmeldung:
**03.07.2024   Patentblatt 2024/27**

(73) Patentinhaber: **Robert Bosch GmbH**
**70442 Stuttgart (DE)**

(72) Erfinder:
- **MANEWALD, Merlin Martin**
  **72764 Reutlingen (DE)**
- **EBERLE, Sebastian**
  **72072 Tuebingen (DE)**

- **SCHUMACHER, Christoph**
  **72144 Dusslingen (DE)**
- **REISIGE, Christian**
  **72072 Tuebingen (DE)**
- **WEINMANN, Matthias**
  **72336 Balingen (DE)**
- **KUTTLER, Stefan**
  **72144 Dusslingen (DE)**
- **KOENIG, Benjamin**
  **73240 Wendlingen (DE)**
- **BAUMGAERTNER, Daniel**
  **72072 Tuebingen (DE)**
- **MUELLER, Jochen**
  **78658 Zimmern (DE)**

(56) Entgegenhaltungen:
DE-A1- 102019 106 585     DE-A1- 102020 204 201
DE-U1- 202019 101 294

EP 4 392 318 B1

**Beschreibung**

Stand der Technik

Die vorliegende Erfindung betrifft ein Steuersystem für ein elektrisches Fahrrad. Bei aktuellen elektrische Fahrrädern werden einem Anwender typischerweise mehrere unterschiedliche Unterstützungsmodi bereitgestellt, welche von dem Anwender ausgewählt werden können. Dabei wird jedoch das Potential unterschiedlicher Unterstützungsmodi nur begrenzt ausgenutzt.

Es wird im Rahmen der vorliegenden Erfindung ein Steuersystem offenbart, durch welches eine verbesserte Unterstützung eines Anwenders eines elektrischen Fahrrads ermöglicht werden soll.

Ferner wird auf die Druckschriften DE 10 2020 204201 A1, DE 20 2019 101294 U1, DE 10 2019 106585 A1, US 2016/016638 A1 und DE 10 2018 109272 A1 verwiesen.

Dokument DE102020204201A1 zeigt die Präambel des Anspruchs 1.

Offenbarung der Erfindung

Das erfindungsgemäße Steuersystem für ein elektrisches Fahrrad umfasst eine Bedieneinheit, welche dazu eingerichtet ist, einen Fahrregler des elektrischen Fahrrads anzusteuern, wobei die Bedieneinheit dazu eingerichtet ist, einem Anwender über eine Bedienungsschnittstelle eine Auswahl zwischen mehreren Unterstützungsmodi zu ermöglichen, und den Fahrregler derart anzusteuern, dass eine Antriebsregelung für einen Motor des Fahrrads gemäß dem gewählten Unterstützungsmodus erfolgt.

Die Antriebsregelung ist dabei eine Regelung, durch welche solche Komponenten des Fahrrads gesteuert werden, die einen Vortrieb des Fahrrads betreffen. So wird durch die durch den Fahrregler bereitgestellte Antriebsregelung insbesondere ein Motor und/oder ein Bremssystem des Fahrrads angesteuert.

Die Antriebsregelung erfolgt insbesondere basierend auf einem Satz von Antriebsparametern, also Werten für bestimmte Antriebsparameter. Ein Satz von Antriebsparametern ist dabei jeweils einem Unterstützungsmodus zugeordnet. Werden durch das Steuersystem mehrere unterschiedliche Unterstützungsmodi bereitgestellt, so ist für jeden der Unterstützungsmodus ein Satz von Antriebsparametern hinterlegt. Der Unterstützungsmodus wird auch als Assist Mode bezeichnet. Beispielhafte Unterstützungsmodi sind die Modi ECO, Tour, Sport und Turbo.

Ein Antriebsparameter ist ein Parameter, der direkt oder indirekt für die Antriebsregelung herangezogen wird. Ein Antriebsparameter ist dabei nicht zwingend eine Regelgröße oder ein Wert für eine gesteuerte physikalische Größe. Ein Antriebsparameter ist dabei ein Parameter, der zum Ermitteln eines Verhaltens der Antriebsregelung hinterlegt ist und beispielsweise zum Ermitteln von Steuergrößen wie Versorgungsspannung oder Strom des Motors herangezogen wird. Die Antriebsparameter sind bevorzugt durch einen Anwender konfigurierbar.

Das Steuersystem für das elektrische Fahrrad ist dabei nicht zwingend vollständig an dem elektrischen Fahrrad angeordnet und kann sich aus mehreren Komponenten zusammensetzen.

Die Bedienungsschnittstelle ist dabei insbesondere eine durch die Bedieneinheit bereitgestellte Anwenderschnittstelle, die einem Anwender eine Auswahl aus bereits konfigurierter Unterstützungsmodi während der Fahrt ermöglicht. Die Anwenderschnittstelle umfasst dabei insbesondere ein Display oder einen Farbindikator, um dem Anwender Informationen bereitzustellen. So wird beispielsweise ein ausgewählter Unterstützungsmodus durch Darstellen einer bestimmten, dem Unterstützungsmodus zugehörigen, Farbe angezeigt.

Die Bedieneinheit ist insbesondere eine für eine Anordnung an einem Lenker des Fahrrads vorgesehene Einheit. Einzelne Komponenten der Bedieneinheit können jedoch auch an anderer Stelle des Fahrrads angeordnet sein, wobei lediglich eine Anzeige an dem Lenker angeordnet ist. Optional wird die Bedieneinheit durch ein mobiles Endgerät, beispielsweise einem Smartphone oder einem Tablet, bereitgestellt. Dabei wird die Bedienungsschnittstelle bevorzugt mittels einer App auf dem mobilen Endgerät bereitgestellt.

Die Unteransprüche zeigen bevorzugte Weiterbildungen der Erfindung.

Bevorzugt umfasst das Steuersystem eine Konfigurationsschnittstelle, die einem Anwender ein Modifizieren von Antriebsparametern und/oder ein Erstellen oder Hinzufügen von neuen Unterstützungsmodi ermöglicht. Die Konfigurationsschnittstelle wird dabei insbesondere zusammen mit der Bedienungsschnittstelle durch die Bedieneinheit bereitgestellt. Alternativ wird die Konfigurationsschnittstelle durch ein separates Konfigurationsgerät, beispielsweise einem Smartphone oder Tablet, bereitgestellt.

Erfindungsgemäss ist die Bedieneinheit dazu eingerichtet, für jeden Unterstützungsmodus mittels einer Kennzahlberechnungsvorschrift basierend auf den für den jeweiligen Unterstützungsmodus hinterlegten Antriebsparametern eine Kennzahl zu errechnen und eine Sortierung der Unterstützungsmodi basierend auf den für die Unterstützungsmodi errechneten Kennzahlen auszuführen. Alternativ oder zusätzlich dazu, ist die Bedieneinheit dazu eingerichtet, für jeden Unterstützungsmodus die für den jeweiligen Unterstützungsmodus hinterlegten Antriebsparametern über eine Schnittstelle bereitzustellen, über die Schnittstelle eine Kennzahl zu empfangen und eine Sortierung der Unterstützungsmodi basierend auf den für die Unterstützungsmodi empfangenen Kennzahlen auszuführen.

Die Sortierung der Unterstützungsmodi erfolgt dabei insbesondere bei einer Darstellung in der Bedienungsschnittstelle. So erfolgt die Sortierung der Unterstützungsmodi insbesondere zum Erstellen einer Reihenfolge für ein Durchwechseln der Unterstützungsmodi beim Fahren. Z.B. wird über eine vordefinierte Taste immer der nächst stärkere Unterstützungsmodus zum Fahren ausgewählt. Mit einer weiteren Taste wird entsprechend der nächst schwächere Unterstützungsmodus ausgewählt. Die Sortierung legt fest, welches ein nächst stärkerer und ein nächst schwächerer Unterstützungsmodus ist.

Alternativ oder zusätzlich erfolgt eine Sortierung der Unterstützungsmodi bei einer Darstellung in der Konfigurationsschnittstelle basierend auf den für die Unterstützungsmodi errechneten oder empfangenen Kennzahlen. Die Stärke des jeweiligen Unterstützungsmodus wird offline, cloudbasiert oder embedded berechnet. Es wird durch die Kennzahlberechnungsvorschrift insbesondere ein Modell definiert, durch welches ein Antriebssystem des Fahrrads abgebildet wird. Über das Modell werden Kennzahlen berechnet, welche bei einer Sortierung schlussendlich verwendet werden.

Bei Elektrofahrrädern ist es klassischerweise so, dass standardmäßig die Unterstützungsmodi nach einer festen Ordnung vorsortiert sind, welche von den jeweiligen Fahrrad- bzw. Motorenherstellern vorgegeben wird. Ist jedoch eine Modifikation der Unterstützungsmodi durch einen oder mehrere Anwender möglich, so muss die Bedienungsschnittstelle oder die Konfigurationsschnittstelle durch ein Steuersystem entsprechend angesteuert werden, um diese Unterstützungsmodi sinnvoll und intuitiv darzustellen. So muss die Bedieneinheit insbesondere dazu geeignet sein, eine Mischung aus Hersteller-, OEM- und User-Modes zurechtkommen.

So wird in dem Steuersystem, insbesondere in der Bedieneinheit, bevorzugt eine Vielzahl von Unterstützungsmodi mit zugehörigen Antriebsparametern gespeichert. Davon ist jedoch nur ein Anteil der Unterstützungsmodi aktiv und wird dem Anwender für eine Auswahl über die Bedienungsschnittstelle bereitgestellt. Dies wird bei der Sortierung der Unterstützungsmodi berücksichtigt.

Die Kennzahlberechnungsvorschrift ist dabei insbesondere eine durch eine Formel oder mehrere Formeln definierte Rechenvorschrift, durch welche bestimmte Parameter, insbesondere Antriebsparameter, eines Unterstützungsmodus kombiniert werden, um im Ergebnis die Kennzahl zu erhalten. Das Berechnen der Kennzahl erfolgt intern über das Steuersystem oder wird extern durchgeführt, wobei die für eine solche Berechnung notwendigen Parameter über eine Schnittstelle von dem Steuersystem bereitgestellt werden. Die Schnittstelle ist dabei insbesondere eine Schnittstelle zu einem Telekommunikationsnetzwerk und/oder eine Funk-Schnittstelle. Durch die ermittelten Kennzahlen wird es bevorzugt ermöglicht, einen Parameter zu ermitteln, welcher eine Stärke eines Unterstützungsmodus repräsentiert. Dadurch wird es ermöglicht, dass mehrere Unterstützungsmodi entsprechend ihrer durch den Parameter gegebenen Stärke sortiert werden.

Bevorzugt wird die Kennzahl gemäß der Kennzahlberechnungsvorschrift aus einem für den zugehörigen Unterstützungsmodus hinterlegten maximalen Drehmoment und/oder einem für den zugehörigen Unterstützungsmodus hinterlegten Unterstützungsfaktor berechnet. Diese hinterlegten Werte haben einen besonders großen Einfluss auf ein Verhalten eines Unterstützungsmodus, welches von einem Anwender als Stärke wahrgenommen wird. Somit sind diese Werte auch besonders gut geeignet um eine Kennzahl zu ermitteln, die eine Stärke eines Unterstützungsmodus wiedergibt.

Dabei ist es vorteilhaft, wenn das maximale Drehmoment und/oder der Unterstützungsfaktor für das Berechnen der Kennzahl für jeden der Unterstützungsmodi für einen gemeinsamen Arbeitspunkt ermittelt werden, wobei der gemeinsame Arbeitspunkt bevorzugt durch einen oder mehrere der folgenden Größen definiert ist: eine Trittfrequenz, einen Fahrerdrehmoment, eine Geschwindigkeit. Der Arbeitspunkt ist somit für jeden der Unterstützungsmodus gleich gewählt, wodurch die ermittelten Kennzahlen vergleichbar sind. Dies ist vorteilhaft, da das maximale Drehmoment und der Unterstützungsfaktor von einem Betriebszustand des Fahrrads abhängig sein können. So wird sind der Unterstützungsfaktor und das maximale Drehmoment beispielsweise geschwindigkeitsabhängig. Um eine Vergleichbarkeit zu erreichen ist es vorteilhaft, den Arbeitspunkt über eine bestimmte Geschwindigkeit definieren. Der Arbeitspunkt kann durch mehrere Werte definiert sein, die dazu geeignet sind einen Betriebszustand des Fahrrads zu beschreiben. So ist der Arbeitspunkt beispielsweise durch eine Kombination von Werten für eine Geschwindigkeit, ein Fahrerdrehmoment, eine Beschleunigung, eine Drehzahl, usw. definiert.

Es ist vorteilhaft, wenn für ein Ermitteln des Arbeitspunktes bevorzugte Werte eines Anwenders für die Trittfrequenz, das Fahrerdrehmoment und die Geschwindigkeit ermittelt werden, und/oder der Arbeitspunkt abhängig von einem Typ des elektrischen Fahrrads gewählt wird. Bevorzugt ist das Steuersystem dazu eingerichtet, die bevorzugten Werte aus einem Fahrverhalten des Anwenders zu ermitteln und den Arbeitspunkt entsprechend zu wählen. Alternativ oder zusätzlich wird der Arbeitspunkt abhängig von einem Typ des elektrischen Fahrrads gewählt, wobei die Wahl des Arbeitspunktes bevorzugt durch das Steuersystem ausgeführt wird. Bevorzugt ist das Steuersystem dazu eingerichtet, in der Bedienungsschnittstelle und/oder der Konfigurationsschnittstelle einen Indikator darzustellen, durch welchen indiziert wird, ob ein Unterstützungsmodus durch einen Anwender modifizierbar ist. Auf diese Weise kann einem Anwender ein schneller Überblick darüber gegeben werden, ob eine Optimierung eines Unterstützungsmodus möglich ist.

Bevorzugt ist die Bedieneinheit dazu eingerichtet, eine durch einen Anwender mit dem Fahrrad zurückgelegte Strecke zu erfassen und einen bestimmten Unterstützungsmodus erst für die Auswahl bereitzustellen, wenn eine definierte Mindestfahrstrecke zurückgelegt wurde. So wird beispielsweise eine von dem Fahrrad zurückgelegte Strecke ab einem vordefinierten Zeitpunkt, beispielsweise ab einer ersten Inbetriebnahme, erfasst. Die von dem Fahrrad zurückgelegte Strecke wird mit einem vordefinierten Schwellenwert verglichen und wenn dieser überschritten wird, wird ein zusätzlicher Unterstützungsmodus freigeschaltet. Optional wird eine Limitierung bei einem Konfigurieren bestehender Unterstützungsmodi aufgehoben, wenn die definierte Mindestfahrstrecke zurückgelegt wurde. Auf diese Weise wird es ermöglicht, dass bestimmte Funktionen des Fahrrads dem Anwender erst nach einer vorgegebenen Zeit bereitgestellt werden, insbesondere dann, wenn dieser hinreichende Erfahrung mit dem Fahrrad gesammelt hat.

Auch ist es vorteilhaft, wenn durch das Steuersystem ein Modus bereitgestellt wird, in dem eine Limitierung einer möglichen Auswahl aus den Unterstützungsmodi über die Bedienungsschnittstelle für vordefinierte Streckenabschnitte erfolgt. Ein solcher Modus kann als Wettkampfmodus bezeichnet werden. Wird der Modus gestartet, so wird dem Anwender insbesondere der zu verwendende Unterstützungsmodus vorgegeben. Somit wird erreicht, dass bei Befahren des vordefinierten Streckenabschnitts ein bestimmter Unterstützungsmodus verwendet werden muss, wenn dieser in dem Wettkampfmodus befahren werden soll. Es können somit vergleichbare Zeiten bei Befahren des vordefinierten Streckenabschnitts durch unterschiedliche Anwender erreicht werden, die einen Vergleich der körperlichen Fitness unterschiedlicher Anwender erlauben.

Die Streckenabschnitte, also einer oder mehrere Abschnitte einer Strecke, und der jedem Streckenabschnitt zugehörige Unterstützungsmodus werden dabei bevorzugt von einem Anwender über eine Konfigurationsoberfläche einer Online-Plattform konfiguriert, und über eine Schnittstelle auf das Steuersystem oder mehrere Steuersysteme unterschiedlicher Fahrräder übertragen. Alternativ werden die Streckenabschnitte und der jedem Streckenabschnitt zugehörige Unterstützungsmodus über die Konfigurationsschnittstelle des Steuersystems konfiguriert.

Dabei ist es vorteilhaft, wenn durch einen Anwender mehrere Streckenabschnitte und somit Segmente einer Strecke vordefiniert werden können und auf dem Steuersystem hinterlegt werden können. Dabei ist es vorteilhaft, wenn jedem Segment ein zugehöriger Unterstützungsmodus zugeteilt ist. Wird die Strecke von einem Anwender befahren, so wird der zur Unterstützung ausgewählte Unterstützungsmodus durch das Steuersystem bevorzugt automatisch gewechselt, sodass jeder Streckenabschnitt der Strecke mit dem jeweils zugeordneten Unterstützungsmodus befahren wird. Alternativ wird dem Anwender angezeigt, dass der Unterstützungsmodus für ein Segment zu wechseln ist, um einen Vergleich mit anderen Anwendern zu erreichen.

Bevorzugt kann für einen Streckenabschnitt ein variabler Unterstützungsmodus definiert werden, wobei beispielsweise ein Unterstützungsgrad über eine Strecke oder eine Zeit variiert. Wird der Unterstützungsmodus durch den Fahrregler bereitgestellt, so wird der Unterstützungsgrad abhängig von einer ermittelten Position oder einer Zeit bereitgestellt. So kann beispielsweise konfiguriert werden, dass ein Unterstützungsgrad nach Einfahrt in einen Streckenabschnitt kontinuierlich reduziert wird.

Bevorzugt wird in dem Wettkampfmodus eine bereitgestellte Motorleistung fixiert. Dadurch wird sichergestellt, dass jeder Anwender die gleiche Unterstützung durch den Motor erfährt.

Ferner ist es vorteilhaft, wenn jeder der Unterstützungsmodi bei einer Darstellung über die Bedienungsschnittstelle durch eine zugehörige Farbe gekennzeichnet ist, wobei die Bedieneinheit dazu eingerichtet ist, für einen Unterstützungsmodus einen die Farbe beschreibenden Farbcode zu berechnen, wobei der Farbcode mittels einer Farbberechnungsvorschrift aus den für diesen Unterstützungsmodus hinterlegten Antriebsparametern berechnet wird. Der Farbcode ist dabei ein digitaler Code, welcher einem Treiber bereitgestellt wird, um ein Wiedergabeelement, beispielsweise eine LED oder einen Display der Bedienungsschnittstelle, dazu anzusteuern, die dem Farbcode zugehörige Farbe darzustellen. Der Farbcode beschreibt dazu insbesondere eine Helligkeit und oder einen Farbton der Farbe. Bevorzugt wird für jeden über die Bedienungsschnittstelle auswählbaren Unterstützungsmodus ein Farbcode mittels der Farbberechnungsvorschrift errechnet. Dies führt dazu, dass für jeden der Unterstützungsmodi eine individuelle Farbe dargestellt werden kann, wodurch unterschiedliche Unterstützungsmodi allein durch die Farbe unterschieden werden können.

Die Farbberechnungsvorschrift ist dabei bevorzugt so gewählt, dass für bestimmte Eigenschaften eines Unterstützungsmodus ein bestimmter Farbton der durch den Farbcode beschriebenen Farbe intensiver dargestellt wird. So nimmt beispielsweise bei einer höheren Dynamik der rote Farbanteil in der durch den Farbcode beschriebenen Farbe zu.

Bevorzugt umfasst die Farbberechnungsvorschrift mehrere einzelne Unter-Berechnungsvorschriften, wobei mittels jeder der Unter-Berechnungsvorschriften jeweils eine Stärke einer Farbkomponente abhängig von einem zugehörigen Antriebsparameter oder einer zugehörigen Eigenschaft eines Unterstützungsmodus berechnet wird.

Bevorzugt sind die Antriebsparameter eines Unterstützungsmodus variabel, und der Farbcode für diesen Unterstützungsmodus wird kontinuierlich neu berechnet, wobei bei der Darstellung des Unterstützungsmodus über die Bedienungsschnittstelle die zugehörige Farbe dem Farbcode angepasst wird. Alternativ oder zusätzlich werden mittels der Farbberechnungsvorschrift für den Unterstützungsmodus mit variablen Antriebsparameter zwei Farbcodes für unterschiedliche Werte des Antriebsparameters berechnet,

welche eine erste Farbe und eine zweite Farbe definieren, wobei bei der Darstellung des Unterstützungsmodus über die Bedienungsschnittstelle ein Farbwechsel zwischen der ersten Farbe und der zweiten Farbe dargestellt wird. Das bedeutet, dass bei solchen Unterstützungsmodi, bei denen die für die Farbberechnungsvorschrift notwendigen Eigenschaften und somit die Antriebsparameter nicht eindeutig sind, da diese sich über einen zeitlichen Verlauf ändern können, entweder der Farbcode kontinuierlich neu errechnet und die wiedergegebene Farbe entsprechend angepasst wird oder das zwei unterschiedliche Farbcodes berechnet werden, welche bevorzugt jeweils auf Extremwerten eines Antriebsparameters für einen Unterstützungsmodus basieren. Wurden zwei unterschiedliche Farbcodes berechnet, so kann ein kontinuierlicher Fachwechsel zwischen den durch diese Farbcodes beschriebenen Farben auf der Bedienungsschnittstelle wiedergegeben werden, um den jeweiligen Unterstützungsmodus zu indizieren.

Auch ist es vorteilhaft, wenn die Farbberechnungsvorschrift den Farbcode aus einem für den zugehörigen Unterstützungsmodus hinterlegten maximalen Drehmoment und/oder einem für den zugehörigen Unterstützungsmodus hinterlegten Unterstützungsfaktor berechnet wird. Diese Antriebsparameter sind besonders charakteristisch durch einen Anwender wahrzunehmen und sind daher bevorzugt durch den Farbcode darzustellen.

Des Weiteren ist es vorteilhaft, wenn Werte der Antriebsparameter für einen Satz von Antriebsparametern über die Konfigurationsschnittstelle durch den Anwender konfigurierbar sind, und eine Anzahl von Charakteristikwerten durch die Konfigurationsschnittstelle dargestellt wird, wobei jeder Charakteristikwert ein Verhalten der Antriebsregelung des Fahrrads für die für den Satz von Antriebsparametern konfigurierten Werte beschreibt. Das bedeutet, dass dem Anwender bei einer Veränderung von einstellbaren Antriebsparametern für einen Unterstützungsmodus unmittelbar ein Feedback bereitgestellt wird, durch welches ein aus den eingestellten Antriebsparametern resultierendes Fahrverhalten dargestellt wird.

Dabei ist es vorteilhaft, wenn die Charakteristikwerte in Form eines Netzdiagramms über die Konfigurationsschnittstelle dargestellt werden. Dadurch wird es ermöglicht, dass mehrere Charakteristikwerte in einem einzelnen Diagramm dargestellt werden und eine geometrische Form aufgespannt wird. Ist ein Anwender mit einer Verwendung des Systems vertraut, so wird dieser aus der geometrischen Form auf das durch die konfigurierten Antriebsparameter eines Unterstützungsmodus verursachte Verhalten einer Antriebsregelung schließen können. Es wird somit eine schnell wahrnehmbare intuitive Darstellung erreicht.

Bevorzugt ist das Steuersystem dazu eingerichtet, einen automatischen Wechsel zwischen unterschiedlichen Unterstützungsmodi auszuführen, damit die Antriebsregelung nach dem Wechsel basieren auf dem Satz von Antriebsparametern von dem Unterstützungsmodus erfolgt, zu dem gewechselt wurde. Das bedeutet mit anderen Worten, dass das Steuersystem dazu eingerichtet ist, zunächst eine Antriebsregelung gemäß einem ersten Unterstützungsmodus auszuführen und dann automatisch, also ohne ein Zutun des Anwenders, von dem ersten Unterstützungsmodus zu einem zweiten Unterstützungsmodus wechseln, um eine Antriebsregelung gemäß dem zweiten Unterstützungsmodus auszuführen. Der Unterstützungsmodus ist dabei insbesondere ein Unterstützungsmodus, der von einem Anwender auch manuell auswählbar ist. Optional ist der Unterstützungsmodus ein Unterstützungsmodus, welcher nur automatisch durch das Steuersystem angewählt werden kann.

Der automatische Wechsel ist dabei insbesondere an Bedingungen geknüpft, durch welche definiert ist, wann der automatische Wechsel ausgeführt wird. Der automatische Wechsel ist dabei insbesondere abhängig von zumindest einem Entscheidungsparameter. Für den Entscheidungsparameter ist dabei insbesondere eine Bedingung definiert und der automatisch Wechsel erfolgt, wenn die Bedingung erfüllt ist. Dabei ist durch die Bedingung insbesondere ein Schwellenwert für einen Entscheidungsparameter definiert. Der Entscheidungsparameter ist dabei insbesondere ein erfasster Messwert oder ein Betriebsparameter des Fahrrads. Beispielhafte Entscheidungsparameter sind ein Ladezustand (SOC) einer Batterie des Fahrrads, eine erfasste Steigung, ein Fahrer-Puls, eine mittlere Fahrleistung, eine Geschwindigkeit, eine Kadenz und/oder ein gewähltes Übersetzungsverhältnis.

Bevorzugt ist der automatische Wechsel abhängig von zumindest einer Bedingung, welcher mittels der Anwenderschnittstelle konfigurierbar ist. So ist durch den Anwender insbesondere ein Schwellenwert für einen zugehörigen Entscheidungsparameter einstellbar. Dabei kann das konfigurieren durch den Anwender auch mittels einer Vorauswahl von möglichen Bedingungen erfolgen. Dabei muss die Bedingung für den Anwender nicht direkt ersichtlich sein, wenn dieser in einer Konfigurationsoption hinterlegt ist.

Des Weiteren ist es vorteilhaft, wenn das Steuersystem dazu eingerichtet ist, ein Fahrverhalten eines Anwenders oder eine Umgebungsbedingung bei einem Betrieb des elektrischen Fahrrads zu erkennen und den Satz von Antriebsparametern basierend auf dem erkannten Fahrverhalten anzupassen oder einen neuen Satz von Antriebsparametern zu erstellen. Auf diese Weise wird ein Verhalten der Antriebsregelung auf einen Anwender automatisch angepasst. Dabei ist es vorteilhaft, wenn vor einem Anpassen der Antriebsparameter eine Bestätigung durch einen Anwender erfolgt. Es wird somit erreicht das ein Anwender einen leichteren Zugang zu den Einstellungen bekommt und die Attraktivität von konfigurierbaren Unterstützungsmodi erhöht wird. Durch eingängige Empfehlungen können komplexere Unterstützungsmodi konfiguriert oder erstellt werden. Der neuen Satz von Antriebsparametern wird daher bevorzugt als Satz von Antriebsparametern für einen Unterstützungsmodus gespeichert und wird bevorzugt im Folgenden nach dem Speichern nicht ohne eine weitere Bestätigung des Anwenders modifiziert.

Das Fahrverhalten eines Anwenders wird insbesondere über eine beliebige Sensorik erfasst, insbesondere über eine Analyse der von der Sensorik erfassten Messwerte über einen zeitlichen Verlauf hinweg. Insbesondere wird der Satz von Antriebsparametern wiederholt angepasst, bis ein bestimmter Betriebszustand des Fahrrads nicht weiter eintritt. So wird beispielsweise analysiert, ob ein Anwender bei einer bestimmten Fahrsituation ein bestimmtes vordefinierte Verhalten zeigt. Ist dies der Fall, so wird durch das Anpassen der Antriebsparameter die Antriebsregelung so modifiziert, dass dieses Verhalten des Anwenders in der bestimmten Fahrsituation nicht weiter auftritt.

Eine Umgebungsbedingung ist eine Bedingung, die ein Umfeld des Fahrrads beschreibt. So wird beispielsweise durch eine Positionsortung, eine initiale Sensorik oder einem Fahrerdrehmoment erkannt, auf welchem Untergrund das Fahrrad aktuell betrieben wird. Es wird somit beispielsweise eine Untergrundbeschaffenheit als Umgebungsbedingungen erfasst.

Bevorzugt sind mehrere Voreinstellungs-Profile hinterlegt, wobei durch jedes der Voreinstellungs-Profile Voreinstellungen für Antriebsparameter eines Unterstützungsmodus definiert sind, wobei bei dem Erstellen eines neuen Unterstützungsmodus die dem neuen Unterstützungsmodus zugehörigen Antriebsparameter gemäß den Voreinstellungen eines der hinterlegten Voreinstellungs-Profile gesetzt werden, und/oder wobei bei einem Modifizieren von Antriebsparametern eines zu modifizierenden Unterstützungsmodus die dem zu modifizierenden Unterstützungsmodus zugehörigen Antriebsparametern gemäß den Voreinstellungen eines der hinterlegten Voreinstellungs-Profile gesetzt werden. Jedes Voreinstellungs-Profil umfasst einen oder mehrere Antriebsparameter bzw. Konfigurationen für diese Antriebsparameter. Der oder die jeweils einem Voreinstellungs-Profil zugehörigen Voreinstellungen für die Antriebsparameter werden genutzt, um die entsprechenden Antriebsparameter für einen Unterstützungsmodus zu setzten. Eine Auswahl, welches der hinterlegten Voreinstellungs-Profil für das Setzen der Antriebsparametern gemäß den Voreinstellungen verwendet wird, kann auf unterschiedliche Weise erfolgen.

Das Modifizieren von Antriebsparametern für einen Unterstützungsmodus und das Erstellen eines neuen Unterstützungsmodus erfolgt bevorzugt über eine Smartphone App Anbindung oder ähnlichem, beispielsweise über ein geeignetes Computer-Programm. Dadurch ist ein Anwender über die App ist in der Lage Einstellungen am Fahrregler vorzunehmen. Da ein Modifizieren von Antriebsparametern eines Unterstützungsmodus oder das Erstellen neuer Unterstützungsmodi für einen Anwender ermöglicht wird, werden die so erstellten oder modifizierten Unterstützungsmodi auch als "User Defined Assist Modes" (UDAM) bezeichnet. Es wird somit eine Individualisierung der Unterstützungsmodi des elektrischen Fahrrads ermöglicht. Die Unterstützungsmodi können mehrere, teils sich funktional überschneidende Antriebsparametern umfassen. Dabei sind die Antriebsparametern zumeist technische Parameter (z.B. maximales Drehmoment), welche ein grundlegendes technisches Verständnis von einem Anwender erfordern. So sind die Antriebsparameter beispielsweise über Schieberegler einstellbar. Für einen Unterstützungsmodi sind so mehrere Schieberegler denkbar, z.B. mehr als 4, um unterschiedliche Antriebsparameter zu konfigurieren, die allesamt das Fahrverhalten des elektrischen Fahrrads beeinflussen. Hat jeder Schieberegler auch nur 10 diskrete Einstellungen, hat der Anwender bereits $10^4 = 1000$ Einstellmöglichkeiten. Für den Anwender kann die Einstellung der vielen Antriebsparameter überfordernd sein, da diese technisch anspruchsvoll und komplex sein kann. Dieser Schwierigkeit für den Anwender wird durch die Voreinstellungs-Profile verringert. Die Voreinstellungs-Profile werden auch als "Presets" bezeichnet.

Es werden somit Voreinstellungs-Profile der Antriebsparameter eingeführt. Mit diesen Voreinstellungs-Profilen hat der Anwender eine einfache Möglichkeit, die Antriebsparameter grob gemäß seiner Anwendung voreinzustellen. Eine optionale Feineinstellung erfolgt dann, bei Interesse, über eine manuelle Anpassung der Antriebsparameter.

Bevorzugt wird eines der mehreren Voreinstellungs-Profile basierend auf Auswahl eines Anwenders über die Konfigurationsschnittstelle gewählt, eines der mehreren Voreinstellungs-Profile basierend auf einer Kategorie des elektrischen Fahrrads gewählt, eines der mehreren Voreinstellungs-Profile basierend auf einem aktiven Nutzerprofil gewählt, und/oder eines der mehreren Voreinstellungs-Profile basierend auf einem Ergebnis eines Frage und Antwort Dialog gewählt wird, wobei einem Anwender mehrere Fragen vorgegeben werden und basierend auf eingegebenen Antworten des Anwenders das Voreinstellungs-Profil gewählt, wobei das gewählte Voreinstellungs-Profil für das Erstellen des neuen Unterstützungsmodus und/oder für das Modifizieren der Antriebsparametern verwendet wird. Das Voreinstellungs-Profil wird somit entweder einmalig durch einen Anwender gewählt oder basierend auf anderen Informationen ermittelt. Alternativ dazu wird das gewünschte Voreinstellungs-Profil bei jeder Konfiguration eines Unterstützungsmodus abgefragt, also immer dann, wenn ein neuer Unterstützungsmodus erstellt wird oder bei einem Modifizieren der Antriebsparameter, beispielsweise um die Antriebsparameter eines existierenden Unterstützungsmodus zurückzusetzen.

Bevorzugt ist eines oder mehrere Voreinstellungs-Profile über eine Service-Schnittstelle konfigurierbar. Die Voreinstellungs-Profile sind bevorzugt nicht durch einen Endanwender veränderbar. Somit könne von OEMs oder Händlern spezifische Voreinstellungs-Profile vorkonfiguriert werden.

Bevorzugt sind die gemäß dem ausgewählten Voreinstellungs-Profil gesetzten Antriebsparameter in der Folge durch einen Anwender modifizierbar sind. Es wird somit dem Anwender über das Voreinstellungs-Profil und die zugehörigen Antriebsparameter ein Startpunkt für eine Anwenderkonfiguration gegeben.

Auch ist es vorteilhaft, wenn die Bedieneinheit eine Schnittstelle zu einer Konfigurationsplattform umfasst und dazu eingerichtet ist, mehrere Sets von Antriebsparametern für eine erste Anzahl an Unterstützungsmodi über die Schnittstelle zu empfangen und zu speichern. Die Schnittstelle ist dabei insbesondere eine Schnittstelle zu einer Konfigurationsplattform, die über einen Server eines Telekommunikationsnetzwerks bereitgestellt wird. Es wird somit ermöglicht, die Unterstützungsmodi mittels der Konfigurationsplattform zu konfigurieren und auf das Steuersystem zu spielen.

Dabei ist es vorteilhaft, wenn die Bedieneinheit dazu eingerichtet ist, eine Auswahl von einem Anwender zu empfangen, durch welche eine Auswahl einer zweiten Anzahl von Unterstützungsmodi aus der ersten Anzahl von Unterstützungsmodi erfolgt, und die zweite Anzahl an Unterstützungsmodi für eine Auswahl während einem Betrieb des Fahrrads bereitzustellen. Die erste Anzahl ist dabei insbesondere größer als die zweite Anzahl. Das bedeutet mit anderen Worten, dass auf der Bedieneinheit mehr Unterstützungsmodi mit den zugehörigen Antriebsparametern gespeichert sind, als aktiv bei einem Betrieb des Fahrrads über die Bedienungsschnittstelle angewählt werden können. So sind einige der Unterstützungsmodi beispielsweise zunächst über die Konfigurationsschnittstelle zu aktivieren, damit diese über die Bedienungsschnittstelle auswählbar sind. Auf diese Weise wird es ermöglicht, dass das Steuersystem neu konfiguriert wird und die verfügbaren Unterstützungsmodi für eine Verwendung bereitgestellt werden können, auch wenn aktuell keine Verbindung zu einer Konfigurationsplattform hergestellt werden kann. Gleichzeitig sind zu jedem Zeitpunkt über die Bedienungsschnittstelle nur eine Zahl von Unterstützungsmodi auswählbar, die eine sinnvolle Handhabung durch den Anwender erlauben.

Ferner ist ein Konfigurationssystem vorteilhaft, welches das erfindungsgemäße Steuersystem und eine Konfigurationsplattform umfasst. Dabei ist die Konfigurationsplattform dazu eingerichtet eine Auswahl von mehreren Unterstützungsmodi aus einer Vielzahl verfügbarer Unterstützungsmodi durchzuführen, um einen Pool von Unterstützungsmodi zu definieren, einem Anwender eine Auswahl von mehreren Unterstützungsmodi aus dem Pool von Unterstützungsmodi zu ermöglichen, und die aus dem Pool von Unterstützungsmodi ausgewählten Unterstützungsmodi mit den diesen Unterstützungsmodi zugehörigen Antriebsparametern über eine Schnittstelle auf die Bedieneinheit des Steuersystems zu übertragen. Die Konfigurationsplattform ist insbesondere eine Online-Plattform und wird über einen Server eines Telekommunionsnetzwerkes bereitgestellt. Die Schnittstelle ist dabei eine Schnittstelle zu dem Telekommunionsnetzwerk.

Die Auswahl von mehreren Unterstützungsmodi aus einer Vielzahl verfügbarer Unterstützungsmodi umfasst dabei insbesondere ein Filtern nach einer Kennung, welche den Typ des Fahrrads beschreibt, welches dem Steuersystem zugehörigen ist. Optional werden durch das Filtern aus der Vielzahl von Unterstützungsmodi beispielsweise nur die Unterstützungsmodi als dem Pool von Unterstützungsmodi zugehörig ausgewählt, welche für eine bestimmte Produktlinie, einen bestimmten Anwender, eine bestimmte Region, eine bestimmte Geschwindigkeit einen bestimmten Typ von Fahrrad oder eine bestimmte Seriennummer zulässig sind. Der Anwender führt eine Auswahl aus dem Pool von Unterstützungsmodi aus, um die für eine bestimmte Bedieneinheit vorgesehenen Unterstützungsmodi zu selektieren. Diese werden über die Schnittstelle auf die zugehörige bedienen Einheit geladen.

Kurze Beschreibung der Zeichnungen

Nachfolgend werden Ausführungsbeispiele der Erfindung unter Bezugnahme auf die begleitende Zeichnung im Detail beschrieben. In der Zeichnung ist:

Figur 1     eine beispielhafte Darstellung eines erfindungsgemäßen Steuersystems,

Figur 2     eine schematische Darstellung zur Sortierung von Unterstützungsmodi,

Figur 3     eine Darstellung zweier Kennlinien für ein maximales Motordrehmoment und einen Unterstützungsfaktor,

Figur 4     eine beispielhafte Darstellung für eine Visualisierung mehrerer Charakteristikwerte,

Figur 5     ein beispielhafter Verlauf eines Ladezustands bei einem Betrieb eines elektrischen Fahrrads,

Figur 6     ein beispielhafter Steigungsverlauf einer Fahrbahnoberfläche bei einem Betrieb des elektrischen Fahrrads,

Figur 7     ein Ablaufdiagramm für ein Verfahren zum Erstellen oder Anpassen von Antriebsparametern für einen Unterstützungsmodus, und

Figur 8     ein Ablaufdiagramm für ein Verfahren zum Erstellen oder Anpassen von Antriebsparametern für einen Unterstützungsmodus unter einer Verwendung von Voreinstellungs-Profilen.

Ausführungsformen der Erfindung

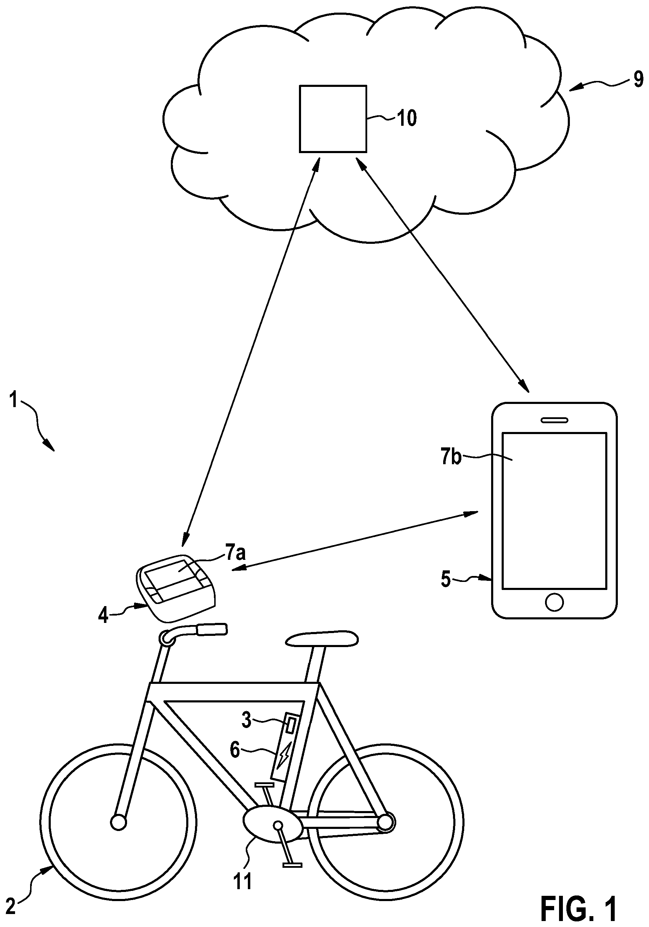

Figur 1 zeigt ein erfindungsgemäßes Steuersystem 1 gemäß einer Ausführungsform der Erfindung. Das Steuersystem 1 umfasst eine Bedieneinheit 4, welche an einem elektrischen Fahrrad 2 angeordnet ist und eine Bedienung des elektrischen Fahrrads 2 ermöglicht. An dem elektrischen Fahrrad 2 ist eine Batterieeinheit 6 und ein elektrischer Motor 11 angeordnet. An der Batterieeinheit 6 ist ferner ein Fahrregler 3 angeordnet, welcher dazu eingerichtet ist, eine Antriebsregelung des elektrischen Fahrrads 2 bereitzustellen. Der Motor 11 wird dazu mittels des Fahrreglers 3 gesteuert. Die Antriebsregelung basiert dabei auf einem Satz von Antriebsparametern, wobei der Satz von Antriebsparametern einem auswählbaren Unterstützungsmodus zugeordnet ist, der durch einen Anwender mittels der Bedieneinheit 4 ausgewählt werden kann.

Die Bedieneinheit 4 ist bevorzugt eine dedizierte Einheit, welche beispielsweise mittels einer Steckschnittstelle mit dem elektrischen Fahrrad 2 und dem Fahrregler 3 verbunden werden kann und somit typischerweise als Komponente des elektrischen Fahrrads 2 angesehen wird. Alternativ ist die Bedieneinheit 4 ein mobiles Endgerät, welches beispielsweise mittels einer drahtlosen Schnittstelle, wie z.B. Bluetooth, mit dem Fahrregler 3 kommuniziert.

In bevorzugten Ausführungsformen ist eine mobile Einheit, beispielsweise ein Smartphone 5, dazu eingerichtet, mit der Bedieneinheit 4 des elektrischen Fahrrads 2 zu kommunizieren. Eine Konfiguration der Bedieneinheit 4 und des Fahrreglers 3 erfolgt dabei mittels einer auf das Smartphone 5 geladenen App.

Die Bedieneinheit 4 ist dazu eingerichtet, einem Anwender über eine Bedienungsschnittstelle 7a eine Auswahl zwischen mehreren Unterstützungsmodi 21-24 zu ermöglichen. Die Bedienungsschnittstelle 7a umfasst dazu insbesondere eine Selektionseinheit, welche zwei Selektionstasten umfasst, durch welche von einem Anwender während einer Fahrt mit dem Fahrrad 2 ein Unterstützungsmodus gewählt werden kann, um eine Antriebsregelung gemäß der für diesen Unterstützungsmodus gespeicherten Antriebsparameter auszulösen. Die Bedienungsschnittstelle 7a umfasst eine Darstellungseinheit, durch welche dem Anwender angezeigt wird, welcher Unterstützungsmodus gerade ausgewählt ist. Die Darstellungseinheit ist beispielsweise ein Display oder zumindest eine LED, wobei durch unterschiedliche Farben einer LED oder eine unterschiedliche Anzahl aktivierter LEDs der ausgewählte Unterstützungsmodus angezeigt wird.

Die Bedieneinheit 4 ist dazu eingerichtet, den Fahrregler 3 derart anzusteuern, dass eine Antriebsregelung für den Motor 11 des Fahrrads 2 gemäß den Antriebsparametern eines gewählten Unterstützungsmodus erfolgt.

Das Steuersystem 1 umfasst eine Konfigurationsschnittstelle 7b, die einem Anwender ein Modifizieren von Antriebsparametern und/oder ein Erstellen von neuen Unterstützungsmodi ermöglicht. Die Antriebsparameter für einen Unterstützungsmodus sind somit mittels der Konfigurationsschnittstelle 7b konfigurierbar. Die Konfigurationsschnittstelle 7b und die Bedienungsschnittstelle 7a können dabei eine gemeinsame Einheit sein. So umfasst die Bedienungsschnittstelle 7a beispielsweise einen Display zum Darstellen des ausgewählten Modus und über den selben Display wird in einem Konfigurationsmodus die Konfigurationsschnittstelle 7b bereitgestellt. Alternativ oder zusätzlich wird die Konfigurationsschnittstelle 7b über das Smartphone 5 bereitgestellt, wobei die konfigurierten Antriebsparameter beispielsweise per Funk an die Bedieneinheit 4 übertragen werden.

Antriebsparameter, die über die Konfigurationsschnittstelle 7b des Smartphones 5 durch den Anwender konfiguriert werden, werden bevorzugt zunächst an die Bedieneinheit 4 übertragen und von dieser dem Fahrregler 3 bereitgestellt. Dabei kann durch die Bedieneinheit 4 oder das Smartphone 5 auch eine Anpassung oder Umrechnung der Antriebsparameter in solche Parameter erfolgen, die von dem Fahrregler 3 verarbeitet werden können.

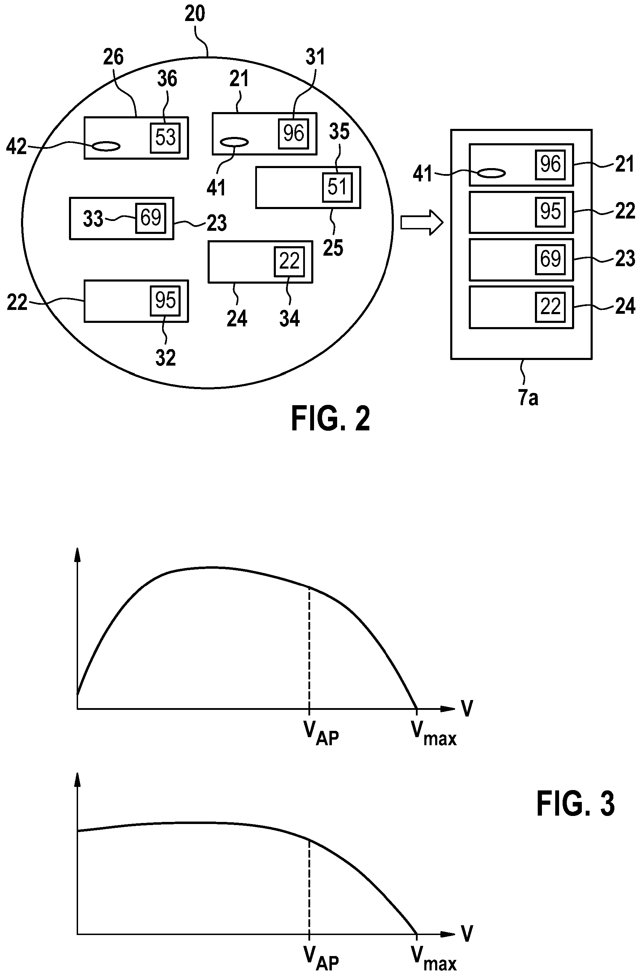

Die Bedieneinheit 4 ist dazu eingerichtet, für jeden auf der Bedieneinheit 4 gespeicherten Unterstützungsmodus 21-26 mittels einer Kennzahlberechnungsvorschrift, basierend auf den für den jeweiligen Unterstützungsmodus hinterlegten Antriebsparameter eine Kennzahl 31-36 zu errechnen und eine Sortierung der Unterstützungsmodi 21-26 bei einer Darstellung in der Bedienungsschnittstelle 7a basierend auf den für die Unterstützungsmodi 21-26 errechneten Kennzahl 31-36 auszuführen. Dies ist schematisch in Figur 2 dargestellt. So ist in der Bedieneinheit 4 beispielsweise ein Satz 20 von Unterstützungsmodi gespeichert. Der Satz 20 von Unterstützungsmodi umfasst beispielsweise einen ersten Unterstützungsmodus 21, einen zweiten Unterstützungsmodus 22, einen dritten Unterstützungsmodus 23, einen vierten Unterstützungsmodus 24, einen fünften Unterstützungsmodus 25 und einen sechsten Unterstützungsmodus 26.

Mittels der Konfigurationsschnittstelle 7b erfolgt eine Auswahl von Unterstützungsmodi aus dem Satz 20 von Unterstützungsmodi, wobei diese ausgewählten Unterstützungsmodi 21-24 in der Bedienungsschnittstelle 7a dargestellt werden. Dabei wird es angestrebt, die Unterstützungsmodi 21-24 derart zu sortieren, dass diese in der über die Bedienungsschnittstelle 7a bereitgestellten Auswahl oder in einer über die Bedienungsschnittstelle 7a bereitgestellten Auswahlreihenfolgt gemäß einer Stärke sortiert sind, wobei die Stärke eine durch den Anwender wahrgenommene Stärke einer Unterstützung ist. Dafür wird für jeden Unterstützungsmodus des Satzes 20 von Unterstützungsmodi jeweils eine Kennzahl 31-36 berechnet. Dies erfolgt mittels der Kennzahlberechnungsvorschrift, wobei für die Berechnung der Kennzahl für jeden Unterstützungsmodus des Satzes 20 von Unterstützungsmodi die gleiche Kennzahlberechnungsvorschrift angewendet wird.

Somit ist jedem Unterstützungsmodus 21-26 des Satzes 20 von Unterstützungsmodi genau eine Kennzahl zugeordnet. So ist im ersten Unterstützungsmodus 21 eine erste Kennzahl 31 zugeordnet, dem zweiten Unterstützungsmodus 22 eine zweite Kennzahl 32 zugeordnet, dem dritten Unterstützungsmodus 23 eine dritte Kennzahl 33 zugeordnet, dem vierten Unterstützungsmodus 24 eine vierte Kennzahl 34 zugeordnet, dem fünften Unterstützungsmodus 25 eine fünfte Kennzahl 35 zugeordnet und dem sechsten Unterstützungsmodus 26 eine sechste Kennzahl 36 zugeordnet.

Die Kennzahl wird beispielsweise gemäß der Kennzahlberechnungsvorschrift aus einem für den zugehörigen Unterstützungsmodus hinterlegten maximalen Drehmoment und/oder einem für den zugehörigen Unterstützungsmodus hinterlegten Unterstützungsfaktor berechnet. So ist beispielsweise für den ersten Unterstützungsmodus 21 ein erstes maximales Drehmoment und ein erster Unterstützungsfaktor als Antriebsparameter hinterlegt. Eine beispielhafte Kennzahlberechnungsvorschrift definiert, dass das maximale Drehmoment mit einem Faktor zu multiplizieren ist und der hinterlegte Unterstützungsfaktor mit einem Faktor zu multiplizieren ist. Die so gewonnenen Ergebnisse könnten wiederum gewichtet miteinander addiert werden, um zu der Kennzahl zu gelangen.

Bei einer Berechnung der Kennzahl basierend auf dem hinterlegten maximalen Drehmoment und/oder dem hinterlegten Unterstützungsfaktor ergibt sich das Problem, dass für diese Werte typischerweise eine Kennlinie und nicht ein einzelner Faktor hinterlegt ist. Daher ist bevorzugt ein gemeinsamer Arbeitspunkt definiert, der als Berechnungsgrundlage für das Berechnen der Kennzahl mittels der Kennzahlberechnungsvorschrift verwendet wird.

In Figur 3 ist beispielhaft dargestellt, wie ein Verlauf eines maximalen Drehmoments über die Geschwindigkeit und ein Verlauf eines Unterstützungsfaktors für die Geschwindigkeit des Fahrrads 2 gewählt ist. Dabei ist in Figur 3 oben eine Kurve für das hinterlegte maximale Drehmoment und in Figur 3 unten eine Kurve für den hinterlegten Unterstützungsfaktor gezeigt. Es ist ersichtlich, dass beide dieser Werte bis zu einer Geschwindigkeit Vmax, beispielsweise 25 km/h, einen Wert von > 0 aufweisen. Es ist ferner dargestellt, dass ein Arbeitspunkt beispielsweise durch eine Geschwindigkeit vAP festgelegt sein kann. Der für das Berechnen der Kennzahl herangezogene Wert des maximalen Drehmoments ist beispielsweise der Wert, der sich aus den in Figur 3 gezeigten Kennlinie für die Geschwindigkeit vAP ergibt. Entsprechend ist der für das Berechnen der Kennzahl gemäß der Kennzahlberechnungsvorschrift gewählte Unterstützungsfaktor der Unterstützungsfaktor, der sich für die Geschwindigkeit vAP in der in Figur 3 unten gezeigten Kennlinie ergibt.

Die Kennzahlberechnungsvorschrift ist dabei bevorzugt so gewählt, dass sich für ein höheres maximales Drehmoment und einen höheren Unterstützungsfaktor auch eine höhere Kennzahl ergibt, als bei vergleichsweise niedrigeren Werten des maximalen Drehmoments und des Unterstützungsfaktors. Dabei kann eine Gewichtung zwischen dem maximalen Drehmoment und dem Unterstützungsfaktor erfolgen.

In Figur 2 sind für die errechneten Kennzahlen, also die erste bis sechste Kennzahl 31 bis 36 beispielhafte Werte gezeigt. Um eine Auswahl der Unterstützungsmodi aus dem Satz 20 von Unterstützungsmodi in der Bedienungsschnittstelle 7a zu sortieren, wird eine Sortierung basierend auf der Kennzahl, insbesondere auf der Größe der Kennzahl, ausgeführt. So werden die Unterstützungsmodi 21-24, welche über die Bedienungsschnittstelle 7a dargestellt werden, beispielsweise absteigend gemäß der Größe ihrer Kennzahl 31-34 sortiert. Da die Kennzahl zugleich ein Indikator für eine Stärke des Unterstützungsmodi ist, da diese auf dem maximalen Drehmoment und dem hinterlegten Unterstützungsfaktor basiert, sind die in der Bedienungsschnittstelle 7a dargestellten Unterstützungsmodi gemäß ihrer Stärke sortiert.

Hinsichtlich des festgelegten gemeinsamen Arbeitspunktes wird darauf hingewiesen, dass dieser durch mehrere Werte, nicht nur durch die Geschwindigkeit vAP, definiert sein kann. So ist ein beispielhafter Arbeitspunkt beispielsweise eine Kombination von Werten für eine Geschwindigkeit, ein Fahrerdrehmoment, eine vorliegende Beschleunigung, eine vorliegende Trittgeschwindigkeit und anderem. Dies ist deswegen vorteilhaft, da die Kennlinien für ein maximales Drehmoment und den Unterstützungsfaktor stark nichtlinear sein können und wiederum von Fahrgeschwindigkeit, Beschleunigung, Fahrerdrehmoment und Fahrerkadenz, also Trittfrequenz, abhängen. Daher muss beispielsweise ein durch die Kennzahlberechnungsvorschrift definiertes Modell entsprechend konfiguriert sein, damit basierend auf dem Modell und somit basierend auf der Kennzahlberechnungsvorschrift, die Kennzahl ermittelt werden kann. So wird beispielsweise ein Arbeitspunkt zu 20 km/h, 20 nm Fahrerdrehmoment, 0 m/s$^2$ Beschleunigung und einer Fahrerkadenz von 60 RPM festgelegt. Dabei können auch einfach die maximalen Werte für diese Parameter gewählt sein.

Bei den in Figur 3 gezeigten Kennlinien wurde der Arbeitspunkt beispielhaft bei der Geschwindigkeit vAP zu 20 km/h gewählt. Je nach Y-Wert wird ein Parameter für die Kennzahl festgelegt. Gewichtet ergibt sich aus den einzelnen Parametern für die Kennzahl eine bestimmte finale Kennzahl. Der Arbeitspunkt kann je nach Fahrradkategorie unterschiedlich gewählt sein, also abhängig von einem Typ des elektrischen Fahrrads 2 gewählt sein. So kann beispielsweise ein Mountain-Bike einen anderen Arbeitspunkt als Berechnungsgrundlage für die Kennzahl haben als ein City-Bike. D.h., dass die Sortierung je nach Kategorie anders ausfallen kann. Außerdem kann der Arbeitspunkt fahrerindividuell erlernt werden. So hat typischerweise jeder Fahrer und jede Fahrerin eine individuelle Lieblingskadenz und einen Lieblingsdrehmoment, was ebenfalls zu einer Parametrisierung eines Modells zum Berechnen der Kennzahl verwendet werden kann.

Die Sortierung kann in einer Drive-Unit oder auch in einem Display der Bedieneinheit 4 erfolgen. Erfolgt die Sortierung bereits in der Drive-Unit, so können die über die Bedienungsschnittstelle 7a darzustellenden Unterstützungsmodi per geordnetem Array an die Bedienungsschnittstelle 7a der Bedieneinheit 4 übertragen werden.

Anstatt eines einzelnen Arbeitspunktes können auch mehrere Arbeitspunkte verwendet werden, die gewichtet sind. Gerade in bergigen Regionen kann es sinnvoll sein, zu dem Hauptarbeitspunkt auf der Ebene noch mehrere Arbeitspunkte in verschiedenen Steigungen auszuwerten. Die geografische Lage kann also ebenfalls zur Sortierung herangezogen werden.

In dem zuvor beschriebenen Beispiel werden die Kennzahlen 31- 36 durch die Bedieneinheit 4 errechnet. In alternative Ausführungsformen ist es jedoch vorteilhaft, wenn die Bedieneinheit 4 dazu eingerichtet ist, die für die jeweiligen Unterstützungsmodi 21- 26 hinterlegten Antriebsparameter über eine Schnittstelle bereitzustellen und über die Schnittstelle im Folgenden die Kennzahlen 31- 36 zu empfangen und die Sortierung der Unterstützungsmodi 21- 24 bei einer Darstellung in der Bedienungsschnittstelle 7a basierend auf den für die Unterstützungsmodi 21-24 empfangenen Kennzahlen 31-24 auszuführen. Das bedeutet, dass die für das Ausführen der Kennzahlberechnungsvorschrift notwendigen Antriebsparameter zunächst über die Schnittstelle für ein externes System bereitgestellt werden und im Folgenden das Ergebnis der Kennzahlberechnungsvorschrift, also die Kennzahl, empfangen wird und für die Sortierung genutzt wird. Die Schnittstelle ist dabei insbesondere eine Schnittstelle zu einem Telekommunikationsnetzwerk und die für die jeweiligen Unterstützungsmodi hinterlegten Antriebsparameter werden an einen Server 10 übertragen und die Kennzahl wird von dem Server 10 empfangen. Auf diese Weise können die Kennzahlen beispielsweise von einem Hersteller gesetzt und korrigiert werden. Es kann somit durch einen Hersteller ein Review der für einen Unterstützungsmodus ermittelten Kennzahl erfolgen.

Unabhängig von dem Ort oder der Einheit, an der die Kennzahl errechnet wird, erfolgt das Berechnen der Kennzahl insbesondere basierend auf einem Modell, durch welches die Stärke des Modus bewertet wird. Dieses Modell wird durch die Kennzahlberechnungsvorschrift beschrieben. Dabei wird durch die Kennzahl insbesondere eine Stärke des Unterstützungsmodus ermittelt. Der Unterstützungsfaktor ist ein Quotient aus Motor und Fahrerdrehmoment.

Bei den in Figur 2 dargestellten Unterstützungsmodi in dem Satz 20 von Unterstützungsmodi sind beispielsweise nur der erste Modus 21 und der sechste Modus 26 durch einen Anwender konfigurierbar. Der zweite Modus 22 bis fünfte Modus 25 sind durch einen Anwender nicht konfigurierbar bzw. modifizierbar. Das bedeutet, dass die Werte für die Antriebsparameter dieser Unterstützungsmodi nicht durch den Anwender verändert werden können. Der erste Modus 21 ist beispielsweise ein Modus, welcher von einem Anwender als "Cube Turbo" benannt wurde und der sechste Modus 26 ist ein Modus, welcher von einem Anwender als "User Tour" benannt wurde. Die übrigen Modi sind herstellerseitig vordefinierte Unterstützungsmodi. So ist der zweite Modus 22 ein Modus, der als "Turbo" bezeichnet ist, der dritte Modus 23 ein Modus, der als "Sport" bezeichnet ist, der vierte Modus 24 ein Modus, der als "ECO" bezeichnet ist und der fünfte Modus 25 ein Modus, der als "Tour" bezeichnet ist.

Der zweite bis fünfte Unterstützungsmodus 22 bis 25 sind herstellerseitig vorkonfigurierte Unterstützungsmodi. Der erste Unterstützungsmodus 21, der zweite Unterstützungsmodus 22, der dritte Unterstützungsmodus 23 und der vierte Unterstützungsmodus 24 werden für eine Auswahl über die Bedienungsschnittstelle 7a dargestellt oder können über die Bedienungsschnittstelle 7a ausgewählt werden. Die Auswahl, welche Unterstützungsmodi über die Bedienungsschnittstelle 7a dargestellt oder auswählbar sind, erfolgte über die Konfigurationsschnittstelle 7b.

Es ergibt sich, dass aus dieser Auswahl von über die Bedienungsschnittstelle 7a dargestellten Unterstützungsmodi lediglich der erste Unterstützungsmodus 21 ein konfigurierbarer Unterstützungsmodus ist, da die anderen Unterstützungsmodi 22, 23, 24 als nicht-konfigurierbar durch den Hersteller vorgegeben sind. Bei einer Benutzung der unterschiedlichen Unterstützungsmodi 21-24 aus der Bedienungsschnittstelle 7a kann es vorkommen, dass ein Anwender feststellt, dass eine Anpassung der Antriebsparameter eines dieser Unterstützungsmodi 21-24 wünschenswert ist. Dies ist jedoch nicht für alle dieser Unterstützungsmodi 21-24 möglich. Daher ist es vorteilhaft, wenn das Steuersystem 1 dazu eingerichtet ist, in der Bedienungsschnittstelle 7a einen Indikator darzustellen, durch welchen indiziert wird, ob ein Unterstützungsmodus 21-24 durch einen Anwender modifizierbar ist. So ist in Figur 2 beispielsweise ein erster Indikator 41 dargestellt, welcher graphisch einer Selektionsfläche zur Auswahl des ersten Unterstützungsmodus 21 beigefügt ist. So ist beispielsweise in der in Figur 2 dargestellten Darstellung der Bedienungsschnittstelle 7a sofort ersichtlich, dass lediglich der ganz oben dargestellte erste Unterstützungsmodus 21 durch einen Anwender modifizierbar/konfigurierbar ist.

Bei dem hier beschriebenen Beispiel ist der Indikator, also der erste Indikator 41, in einer Darstellung der auswählbaren Unterstützungsmodi in der Bedienungsschnittstelle 7a gezeigt. Alternativ ist es jedoch auch vorteilhaft, wenn dieser Indikator in einer Konfigurationsschnittstelle 7b dargestellt wird, in welcher beispielsweise eine Auswahl erfolgen kann, welche Unterstützungsmodi aus den Unterstützungsmodi des Satzes 20 von Unterstützungsmodi über die Bedienungsschnittstelle 7a dargestellt werden. Dies ist ebenfalls beispielhaft in Figur 2 dargestellt, wobei ersichtlich ist, dass der erste Unterstützungsmodus 21 und der sechste Unterstützungsmodus 26 durch einen ersten Indikator 41 und durch einen zweiten Indikator 42 markiert sind, um anzuzeigen, dass diese Unterstützungsmodi durch einen Anwender konfigurierbar sind.

Optional können einzelne Unterstützungsmodi über die Schnittstelle zu dem Server 10 für ein Modifizieren durch den Anwender freigeschaltet werden.

Auch ist es vorteilhaft, wenn durch die Bedieneinheit 4 eine durch den Anwender mit dem Fahrrad 2 zurückgelegte Strecke erfasst wird und ein bestimmter Unterstützungsmodus erst für die Auswahl über die Bedienungsschnittstelle 7a oder für eine Konfigurierbarkeit mittels der Konfigurationsschnittstelle 7b durch den Anwender freigeschaltet wird, wenn eine definierte Mindestfahrtstrecke zurückgelegt wurde. So wird ein bestimmter Unterstützungsmodus beispielsweise erst dann für den Anwender verfügbar oder konfigurierbar, wenn dieser mehr als 1000 km Strecke mit dem Fahrrad 2 zurückgelegt hat. In ähnlicher Weise kann auch eine Limitierung bei einem Konfigurieren bestehender Unterstützungsmodi aufgehoben werden, wenn die definierte Mindestfahrstrecke zurückgelegt wurde. So können beispielsweise stärke Unterstützungsmodi ausgewählt werden, wenn durch das Zurücklegen der Mindestfahrstrecke sichergestellt ist, dass der Anwender hinreichend Übung im Umgang mit dem Fahrrad 2 besitzt.

Optional kann der Anwender anhängig von der Stärke der gewählten Einstellungen für einen Unterstützungsmodus darauf hingewiesen werden, dass für den gewählten Unterstützungsmodus und die Einstellung entsprechende Fahrerfahrung empfohlen wird.

Bevorzugt wird durch das Steuersystem 1 ein Modus bereitgestellt, indem eine Limitierung einer möglichen Auswahl aus den Unterstützungsmodi über die Bedienungsschnittstelle 7a für vordefinierte Streckenabschnitte erfolgt. Auf diese Weise wird es ermöglicht, dass unterschiedliche Anwender die vordefinierten Streckenabschnitte mit entsprechender Unterstützung durch den Motor 11 des Fahrrads 2 befahren. Der Modus wird daher im Folgenden auch als Wettkampfmodus bezeichnet.

Bei herkömmlichen Fahrrädern, also Fahrräder ohne elektrische Unterstützung, beispielsweise bei Rennrädern, ist es so, dass unterschiedliche Fahrer und somit Anwender gegenseitig ihre Fahrzeiten für einzelne Strecken und Streckenabschnitte vergleichen können. Bei elektrischen Fahrrädern ist es ohne den Modus zur Limitierung einer möglichen Auswahl eines Unterstützungsmodus nicht möglich, gefahrene Zeiten unterschiedlicher Anwender miteinander zu vergleichen, da die Motor- und Akkuleistung die gefahrenen Zeiten stark verfälschen können.

Durch den Wettkampfmodus kann ein bestimmter Unterstützungsmodus beim Befahren für einen vordefinierten Streckenabschnitt festgelegt werden, wenn es erwünscht ist eine Vergleichszeit zu fahren. Auf diese Weise kann die Motorleistung fixiert werden und damit gefahrene Streckenabschnitte von unterschiedlichen Anwendern verglichen werden.

Um das Vergleichen von Fahrten unterschiedlicher Anwender zu ermöglichen, wird zunächst eine Strecke mit einem oder mehreren Streckenabschnitten definiert. Ein einzelner Streckenabschnitt wird dabei auch als "Segment" bezeichnet. Das Definieren der Strecke und der zugehörigen Streckenabschnitte erfolgt beispielsweise über eine Konfigurationsplattform, welche durch den Server 10 bereitgestellt wird. Eine Strecke kann dabei mittels einer Karte festgelegt werden oder einzelne Streckenabschnitte können durch Charakteristiken einer Strecke, beispielsweise Länge und Steigung, definiert werden. Ferner wird mittels der Konfigurationsplattform jedem Streckenabschnitt ein Unterstützungsmodus zugeordnet. Ein einem Streckenabschnitt zugeordneter Unterstützungsmodus ist nicht zwingend auf dem Steuersystem 1 des elektrischen Fahrrads verfügbar. Ein für einen Streckenabschnitt festgelegter Unterstützungsmodus wird daher bevorzugt zusammen mit den zugehörigen Antriebsparametern zusammen mit der Definition des Streckenabschnitts an das Steuersystems 1 übertragen.

Insbesondere ist jedem vordefinierten Streckenabschnitt genau ein Unterstützungsmodus zugeordnet und das Steuersystem 1 wird in dem Modus, in dem eine Limitierung einer möglichen Auswahl aus den Unterstützungsmodi limitiert wird, genau auf den für den Streckenabschnitt vordefinierten Unterstützungsmodus limitiert. Das bedeutet, dass ein vordefinierter Streckenabschnitt mit einem bestimmten Unterstützungsmodus zu befahren ist.

Alternativ zu der Konfigurationsplattform kann ein vordefinierter Streckenabschnitt mit zugehörigem Unterstützungsmodi auch dadurch definiert werden, dass die entsprechenden Streckenabschnitte in dem jeweils zugehörigen Unterstützungsmodus mit dem elektrischen Fahrrad 2 befahren werden und die vordefinierten Streckenabschnitte zusammen mit dem jeweils verwendeten Unterstützungsmodus von dem Steuersystem 1 erfasst und an den Server 10 übertragen werden.

Wird der Wettkampfmodus ausgewählt, so wird es über die Konfigurationsschnittstelle 7b oder die Bedienungsschnittstelle 7a ermöglicht, eine Auswahl einer vordefinierten Strecke mit vordefinierten Streckenabschnitten zu tätigen, mit welcher ein Anwender sich vergleichen will. Die verfügbaren möglichen Strecken werden dabei von dem Server 10 abgerufen. Damit ein Vergleich unterschiedlicher Anwender im Sinne eines Wettkampfes möglich ist, ist es möglich, dass ein Anwender solche Strecken und Streckenabschnitte mit den zugehörigen definierten Unterstützungsmodi von dem Server 10 herunterlädt, die zuvor von einem anderen Anwender auf den Server 10 geladen wurden.

So wird von dem Server 10 beispielsweise eine Strecke heruntergeladen, die einen ersten Streckenabschnitt, einen zweiten Streckenabschnitt und einen dritten Streckenabschnitt umfasst. Der erste Streckenabschnitt ist in dem ersten Unterstützungsmodus 21, der zweite Streckenabschnitt ist mit dem zweiten Unterstützungsmodus 22 und der dritte Streckenabschnitt ist mit dem dritten Unterstützungsmodus 23 zu befahren. Begibt sich der Anwender mit eingeschaltetem Wettkampfmodus auf die Strecke, so wird in dem ersten Streckenabschnitt von dem Steuersystem 1 automatisch der erste Unterstützungsmodus 21 aktiviert. Der Anwender hat nicht die Möglichkeit, diesen Unterstützungsmodus zu wechseln, außer der Wettkampfmodus wird verlassen. In diesem Fall wird keine vergleichbare Zeit erfasst. Erreicht der Anwender mit dem Fahrrad 2 den zweiten Streckenabschnitt, so wird automatisch von dem ersten Unterstützungsmodus 21 auf den zweiten Unterstützungsmodus 22 gewechselt. Erreicht der Anwender den dritten Streckenabschnitt, so wird von dem Steuersystem 1 automatisch von dem zweiten Unterstützungsmodus 22 in den dritten Unterstützungsmodus 23 gewechselt. Es wird darauf hingewiesen, dass ebenfalls definiert sein kann, dass in einem Streckenabschnitt keine Unterstützung durch den elektrischen Motor 11 erfolgt. Optional ist es für einen Streckenabschnitt vordefiniert, welche Motorleistung innerhalb dieses Streckenabschnitts bereitgestellt wird.

Ein Unterstützungsmodus, welcher einem Streckenabschnitt zugeordnet ist, kann auch variabel definiert sein. So kann sich beispielsweise ein Unterstützungsgrad kontinuierlich ändern und nach der Einfahrt in einen Streckenabschnitt kontinuierlich reduziert, erhöht oder gemäß einer vorgegebenen Kurve variiert werden.

Das Steuersystem 1 ist somit auch dazu eingerichtet, vordefinierte Streckenabschnitte zu empfangen, wobei optional für jeden oder einzelne der Streckenabschnitte zugehörige Unterstützungsmodi mit zugehörigen Antriebsparametern von dem Steuersystem 1 empfangen werden. Wird der Wettkampfmodus ausgewählt und eine solche Strecke ausgewählt, so werden ausschließlich die den Segmenten zugeordneten Unterstützungsmodi für den Betrieb des Fahrrads 2 zugelassen.

Die voranstehende Beschreibung bezieht sich auf Strecken und Streckenabschnitte. Die damit beschriebene Logik kann jedoch genauso auf komplette Strecken, Touren oder Tracks angewendet werden. Die Vergleichbarkeit von Segmenten bzw. Streckenabschnitten setzt voraus, dass derselbe Fahrmodus gewählt wird, den auch ein Ersteller beim Befahren des Streckenabschnitts gewählt hat. Dazu wird, sofern dies technisch für das Steuersystem 1 zulässig ist, der entsprechende Unterstützungsmodus auf das Steuersystem 1 des Fahrrads 2 für die Fahrt entlang des Streckenabschnittes übertragen, falls der Unterstützungsmodus noch nicht auf dem Steuersystem 1 verfügbar ist.

Das Steuersystem 1 fixiert nach dem Start des Wettkampfmodus und nach Beginn des Befahrens eines Streckenabschnittes den Unterstützungsmodus, so dass der gesamte Streckenabschnitt vergleichbar gewertet werden kann. Dabei ist es auch möglich, dass der ausgewählte Streckenabschnitt vorsieht, dass im "Off"-Modus, d.h., ohne Unterstützung, gefahren werden muss.

Weiterhin ist es möglich, dass es darum geht, das Segment in verschiedene Unterstützungsmodi abzufahren. Dazu wird die Kombination oder Reihenfolge der Unterstützungsmodi des Erstellers des Streckenabschnittes gespeichert und alle, die den Streckenabschnitt nachfahren, bekommen automatisch die Unterstützungsmodi gewechselt, so wie sie der Ersteller des Streckenabschnitts bei seiner Fahrt gefahren hat. Hier ist auch die Erstellung von solchen Segmenten "auf dem Papier bzw. digital möglich", ohne dass sie zuerst gefahren werden müssen. Dies erfolgt beispielsweise über die auf dem Server 10 bereitgestellte Konfigurationsplattform. Daraus ergeben sich noch weitere Möglichkeiten, z.B., dass sich der Unterstützungsgrad kontinuierlich ändert und nach der Einfahrt in einen Streckenabschnitt langsam zurückgeht. Auch hier bekommen alle, die den Streckenabschnitt nachfahren, die Einstellung automatisch auf das Steuersystem 1 ihres Fahrrads 2 übertragen.

Der verwendete Unterstützungsmodus kann in dem Wettkampfmodus nach der Einfahrt in den ersten Streckenabschnitt nicht mehr manuell geändert werden, wenn eine Wertung der Zeit von dem Anwender gewünscht ist. Zu jeder Zeit kann der Anwender jedoch den Unterstützungsmodus manuell ändern, wobei dies jedoch zu einem Verlassen des Wettkampfmodus führt. Dabei erfolgt bevorzugt ein Warnhinweis und eine explizite Bestätigung des Anwenders ist notwendig, da in diesem Fall bei Änderung des Unterstützungsmodus das Segment nicht gewertet werden kann.

Bevorzugt kann bei einer Bewertung von Bestzeiten der entsprechenden Streckenabschnitte zwischen unterschiedlichen Vorgaben für einen Unterstützungsmodus gewechselt werden und die jeweiligen Bestzeiten angeschaut und durch Verwendung des Wettkampfmodus herausgefordert werden.

Zusätzlich zu dem Unterstützungsmodus können in dem Wettkampfmodus auch einzelne Antriebsparameter fixiert werden, z.B. ein maximales Drehmoment oder eine maximale Geschwindigkeitsunterstützung, und/oder andere Antriebsparameter einstellbar sein. Die Einstellung der Werte einzelner Antriebsparameter für einen Unterstützungsmodus ist damit eine weitere Größe, die zur Einordnung von Bestzeiten verwendet werden kann. Damit dies nicht zu beliebig vielen Kombinationen führt, kann für die Wertung der Zeit eine Limitierung möglicher Werte für Antriebsparameter eines Unterstützungsmodus gewählt werden.

Die Konfigurationsplattform wird insbesondere mittels einer App auf dem Smartphone 5 bereitgestellt, welches über ein Telekommunikationsnetzwerk 9, typischerweise das Internet, mit dem Server 10 verbunden ist. Ebenfalls kann über die Konfigurationsschnittstelle 7b des Smartphones 5 eine Vergleichsstrecke erstellt oder heruntergeladen werden, die in dem Wettkampfmodus befahren werden kann.

Die über die Bedienungsschnittstelle 7b für eine Verwendung auswählbaren Unterstützungsmodi sind mit jeweils einer zugehörigen Farbe gekennzeichnet. So ist entweder ein Indikator für einen bestimmten Unterstützungsmodus in der dem Unterstützungsmodus zugehörige Farbe gefärbt oder es wird ausschließlich eine Farbe dargestellt, um anzuzeigen, dass ein bestimmter Unterstützungsmodus ausgewählt ist. Um dem Anwender eine Charakteristik des Unterstützungsmodus anzuzeigen, wird jedem Unterstützungsmodus nicht lediglich eine vorgegebene Farbe zugeordnet, sondern es wird für jeden Unterstützungsmodus eine Farbe berechnet, wobei insbesondere ein Farbcode basierend auf einer Farbberechnungsvorschrift berechnet wird.

Der Farbcode ist beispielsweise ein RGB-Code. Durch den Farbcode ist die Farbe definiert, die für einen Unterstützungsmodus dargestellt wird. Der Farbcode wird mittels der Farbberechnungsvorschrift aus den für einen Unterstützungsmodus hinterlegten Antriebsparametern berechnet. Der Farbcode beschreibt eine Helligkeit und/oder einen Farbton der Farbe. Die über die Bedienungsschnittstelle 7a angezeigte Farbe ist somit nicht für einen Unterstützungsmodus oder einen Speicherplatz herstellerseitig fest vorgegeben, sondern die Farbe wird aus den Eigenschaften des jeweiligen Unterstützungsmodus abgeleitet. Dies erfolgt über die Farbberechnungsvorschrift. Damit wird erreicht, dass bestimmte Fahreigenschaften für den Anwender nachvollziehbar über eine Farbskala dargestellt werden. Der Zusammenhang zwischen Charakteristika eines Unterstützungsmodus und der dargestellten Farbe ist dabei durch die Farbberechnungsvorschrift definiert. Ähnliches Fahrverhalten, also ähnliche Charakteristika, führen stets zu einer ähnlichen Farbe. Die verschiedenen Unterstützungsmodi werden damit für den Anwender vergleichbar. Die Farbe kann automatisch gemäß der Farbberechnungsvorschrift angepasst werden, wenn ein Unterstützungsmodus über die Konfigurationsschnittstelle 7b modifiziert wird. Auch kann einem neu erstellten Unterstützungsmodus ein Farbcode und somit eine Farbe zugeteilt werden.

Zusätzlich zu der farbigen Codierung von Fahreigenschaften kann auch eine weitere Differenzierung durch eine Anpassung der Helligkeit der Farbe oder durch Farbverläufe und/oder Helligkeitsverläufe erfolgen. So ist es vorteilhaft, wenn die Farbberechnungsvorschrift einen Parameter umfasst, der zu einem Blinken der Farbe, also einem aufeinanderfolgenden Helligkeitswechsel, führt, wenn die Charakteristik eines Unterstützungsmodus einen besonders aggressiven Modus beschreibt.

Sind die Antriebsparameter eines Unterstützungsmodus variabel, so wird für diesen Unterstützungsmodus der Farbcode kontinuierlich neu berechnet, wobei bei der Darstellung des Unterstützungsmodus über die Bedienungsschnittstelle 7a die für einen Unterstützungsmodus dargestellte Farbe dem Farbcode kontinuierlich angepasst wird. Ein Unterstützungsmodus ist dann variabel, wenn dieser über die Konfigurationsschnittstelle 7b angepasst werden kann oder über einen anderen Mechanismus verändert wird, beispielsweise in dem Wettkampfmodus über die Zeit variiert. So wird beispielsweise in einem Automatikmodus, welcher ein möglicher Unterstützungsmodus ist, eine Unterstützung durch den Motor 11 für den Anwender situationsabhängig zwischen gering und stark angepasst. Dabei ist beispielsweise eine geringe Unterstützung durch die Farbe blau dargestellt und eine starke Unterstützung durch die Farbe rot dargestellt. Sowohl die Farbe blau als auch die Farbe rot wurde dabei basierend auf der Farbberechnungsvorschrift errechnet und geben eine geringe bzw. starke Unterstützung als Charakteristik des Automatikmodus wieder. Die Charakteristik eines Unterstützungsmodus ist durch die hinterlegten Antriebsparameter definiert oder wird aus diesen errechnet. Um die in dem Automatikmodus auftretenden unterschiedlichen Charakteristiken darzustellen, die durch die Farben blau und rot repräsentiert werden, wird ein sanfter periodisch fortlaufender Farbwechsel zwischen blau und rot dargestellt. Um die Charakteristik dieses Unterstützungsmodus dem Anwender zu signalisieren.

Es werden somit mittels der Farbberechnungsvorschrift zwei Farbcodes berechnet, welche eine erste Farbe, hier blau, und eine zweite Farbe, hier rot, definieren. Bei der Darstellung des Unterstützungsmodus über die Bedienungsschnittstelle 7a wird ein Farbwechsel zwischen der ersten Farbe und der zweiten Farbe dargestellt.

Wird der Farbcode für einen Unterstützungsmodus kontinuierlich neu berechnet, wobei bei der Darstellung des Unterstützungsmodus über die Bedienungsschnittstelle 7a die zugehörige Farbe dem Farbcode angepasst wird, so wird für den Anwender zu jedem Zeitpunkt jeweils eine Farbe dargestellt, die dem aktuellen Verhalten, also der aktuellen Charakteristik des jeweiligen Unterstützungsmodus entspricht.

Durch die zusätzliche Dimension der zeitlichen Änderung der Helligkeit und zeitlichen Änderung der Farbe kann der Darstellungsraum gegenüber einer eindimensionalen Farbe deutlich erweitert werden, sodass komplexere Berechnungsfunktionen möglich werden und dem Nutzer mehr Informationen über den vorliegenden Unterstützungsmodus mitgeteilt werden können.

Mittels der Farbberechnungsvorschrift wird der Farbcode beispielsweise aus einem für einen Unterstützungsmodus hinterlegten maximalen Drehmoment und/oder einen für den Unterstützungsmodus hinterlegten Unterstützungsfaktor berechnet. Wie auch bei der Kennzahlberechnungsvorschrift kann dabei das maximale Drehmoment und/oder der hinterlegte Unterstützungsfaktor für einen festgelegten Arbeitspunkt herangezogen werden.

Eine mögliche Farbberechnungsvorschrift definiert, dass ein Unterstützungsmodus auf einen mittleren Unterstützungsfaktor $f_{Modus}$ zu untersuchen ist, der sich aus dem Verhältnis von Motorleistung zu Eigenleistung ergibt, und dieses Verhältnis auf eine Farbskala bspw. von einer ersten Farbe (bspw. blau) zu einer zweiten Farbe (bspw. rot) abgebildet wird. Z.B. kann ein Unterstützungsfaktor von 0 der Farbe blau entsprechen, ein maximaler Unterstützungsfaktor von $f_{Max} = 4$ entspricht der Farbe rot und dazwischen wird für den mittleren Unterstützungsfaktor gemäß der Farbwellenlänge $\lambda$ interpoliert. Dies erfolgt beispielsweise basierend auf der folgenden Formel:

$$\lambda_{Modus} = \lambda_{rot} * \frac{f_{Modus}}{f_{Max}} + \lambda_{blau} * \left(1 - \frac{f_{Modus}}{f_{Max}}\right) \qquad (1)$$

Der Wert $\lambda_{Modus}$ entspricht dabei der Farbwellenlänge, die durch den Farbcode für den mittleren Unterstützungsfaktor beschrieben wird. Die Werte $\lambda_{rot}$ und $\lambda_{blau}$ entsprechen den Farbwellenlängen der Farben Rot und Blau. Die Farbe für den Unterstützungsmodus ergibt sich aus der Farbwellenlänge $\lambda$ und der Farbcode wird so gewählt, dass dieser die dem Unterstützungsmodus zugehörige Farbe mit der Farbwellenlänge $\lambda_{Modus}$ definiert.

Eine weitere mögliche Farbberechnungsvorschrift definiert, dass Unterstützungsfaktoren abhängig vom Betriebszustand sind. Ein variabler Unterstützungsmodus wird bspw. mit einem Unterstützungsfaktor zwischen 1.2 bis 3.4 angegeben. Das Minimum von 1.2 kann nun wie im oberen Beispiel gemäß Formel (1) auf eine Farbe abgebildet werden, und das Maximum 3.4 ebenso gemäß Formel (1) auf eine andere Farbe abgebildet werden. Die darzustellende Farbe kann nun zwischen den zwei so definierten Farben dauerhaft hin- und herwechseln und diese besondere Dynamik damit dem Nutzer kenntlich machen.

Aus Formel (1) kann somit einer erste Farbe für einen variablen Unterstützungsmodus zu $\lambda_{Modus,Min}$ für $f_{Modus,Min}$ = 1.2 und eine zweite Farbe für den variablen Unterstützungsmodus zu $\lambda_{Modus,Max}$ für $f_{Modus,Max}$ = 3.4 berechnet werden. Diese Farben werden in einem Farbwechsel wiedergegeben, der ebenfalls durch die Farbberechnungsvorschrift berechnet wird. So umfasst die

Farbberechnungsvorschrift beispielsweise eine Definition einer Farbe $\lambda_{Modus,t}$ eines variablen Unterstützungsmodus über den Verlauf der Zeit t:

$$\lambda_{Modus,t} = \lambda_{Modus,Min} * \sin{(\omega t)}^2 + \lambda_{Modus,Max} * \cos{(\omega t)}^2 \quad (2)$$

Dabei ist durch $\omega$ die Periodendauer des Farbwechsels definiert. Die Farben Rot und Blau sind beispielhaft gewählt. Alternativ kann auch jede andere Kombination von Farben verwendet werden.

Optional werden neben oder alternativ zu dem Unterstützungsfaktor andere oder weitere Eigenschaften des Unterstützungsmodus berücksichtigt, für den ein Farbcode berechnet wird. Hier bieten sich bspw. Metriken für die Dynamik, ein Nachschiebeverhalten, eine maximale Unterstützungsgeschwindigkeit oder auch das Maximale Drehmoment an.

Optional wird die Farbberechnungsvorschrift so gewählt, dass auch Eigenschaften eines Unterstützungsmodus, welche keinen Einfluss auf eine Charakteristik des Unterstützungsmodus haben, also nicht auf den Antriebsparametern eines Unterstützungsmodus basieren, durch den Farbcode und somit die Farbe angezeigt werden.

So kann durch den Farbcode beispielsweise angezeigt werden, ob es sich um einen durch einen Hersteller, einen durch einen OEM oder einen durch einen Anwender konfigurierten Unterstützungsmodus handelt, indem für eine der Eigenschaften ein bestimmter Farbton zu dem Farbcode addiert wird. So sind beispielswiese die Unterstützungsmodi eines Herstellers immer durch verschiedene Rot-Töne oder ein Rot mit unterschiedlichen Helligkeiten dargestellt, die Unterstützungsmodi eines OEM immer durch verschiedene Blau-Töne oder einem Blau mit unterschiedlichen Helligkeiten dargestellt, und die Unterstützungsmodi eines Anwenders immer durch verschiedene Grau-Töne oder einem Grau mit unterschiedlichen Helligkeiten dargestellt. Somit wird es auch ermöglicht, das jeder OEM sich auch "seine" Farbe definieren und schützen kann.

Alternativ kann jede Fahrradkategorie eine eigene Farbe bekommen (Mountainbike Modi: Rottöne, Tourenrad: Grüntöne). Die Farbberechnungsvorschrift für die Farbwahl wird dann entsprechend angepasst, beispielsweise durch Hinzufügen einer Farbkomponente zu einer gemäß der Formeln (1) und/oder (2) errechneten Farbe.

Kann ein Unterstützungsmodus durch den Anwender über die Konfigurationsschnittstelle 7b konfiguriert werden, also können Werte der Antriebsparameter für einen Satz von Antriebsparametern über die Konfigurationsschnittstelle 7b durch den Anwender konfiguriert werden, so ist es vorteilhaft, wenn eine Anzahl von Charakteristikwerten durch die Konfigurationsschnittstelle 7b dargestellt wird, wobei jeder Charakteristikwert ein Verhalten der Antriebsregelung des Fahrrads für die für den Satz von Antriebsparametern konfigurierten Werte beschreibt.

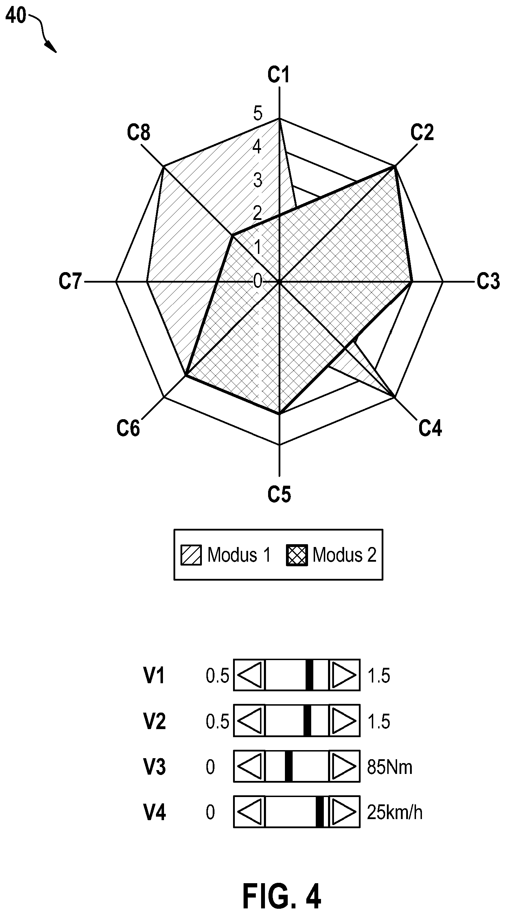

Durch die Charakteristikwerte werden somit unterschiedliche Eigenschaften der Antriebsregelung, wie z.B. eine Agilität, eine Stärke, eine Reichweite, ein verursachter Kalorienverbrauch, ein Spaßfaktor, ein erreichter Komfort, eine typische Geschwindigkeit und eine bereitgestellte Leistung beschrieben. In Figur 4 ist eine durch die Konfigurationsschnittstelle 7b dargestellte Ansicht gezeigt, in welcher Werte von Antriebsparametern V1-V4 durch einen Anwender über Schieberegler konfiguriert werden können, was in Figur 4 unten dargestellt ist. So ist beispielsweise als ein erster Wert V1 eine Agilität als Antriebsparameter einstellbar. Als ein zweiter Wert V2 ist als Wert für einen Unterstützungsfaktor als Antriebsparameter einstellbar. Als ein dritter Wert V3 ist ein Wert für ein maximales Drehmoment als Antriebsparameter einstellbar. Als ein vierter Wert V4 ist eine maximale Geschwindigkeit als Antriebsparameter einstellbar. Wird ein Unterstützungsmodus gemäß dieser Antriebsparameter konfiguriert, so weist dieser ein bestimmtes Verhalten auf, welches durch die Charakteristikwerte beschrieben werden kann. Die Charakteristikwerte werden aus den konfigurierten Antriebsparametern berechnet und in Form eines Netzdiagramms 40 über die Konfigurationsschnittstelle 7b dargestellt, um einen Anwender eine Einschätzung einer Gesamtcharakteristik eines konfigurierten Unterstützungsmodus zu ermöglichen.

So ist in Figur 4 oben das Netzdiagramm 40 dargestellt, wobei über eine erste Achse C1 die Stärke als Charakteristikwert, über eine zweite Achse C2 die Reichweite als Charakteristikwert, über eine dritte Achse C3 der erwartete Kalorienverbrauch des Anwenders als Charakteristikwert, über eine vierte Achse C4 ein Spaßfaktor als Charakteristikwert, über eine fünfte Achse C5 ein Komfortfaktor als Charakteristikwert, über eine sechste Achse C6 eine Geschwindigkeit als Charakteristikwert, über eine siebte Achse C7 eine Leistung als Charakteristikwert und über eine achte Achse C8 eine Agilität als Charakteristikwert dargestellt ist.

Die über die einzelnen Achsen C1 bis C8 dargestellten Charakteristikwerte werden aus den Werten der Antriebsparameter V1 - V4 errechnet. Dabei ist es auch möglich, dass einzelne der Antriebsparameter direkt als Charakteristikwert wiedergegeben werden. Bevorzugt werden jedoch einzelne Charakteristikwerte aus einer Kombination von mehreren Antriebsparametern errechnet.

In Figur 4 sind die Charakteristikwerte für zwei unterschiedliche Unterstützungsmodi dargestellt. So ist beispielsweise ersichtlich, dass ein erster Unterstützungsmodus, welcher als "Mode 1" bezeichnet wird, eine große Agilität und Stärke bei der Antriebsregelung bereitstellt. Ferner ist ersichtlich, dass in einem zweiten Unterstützungsmodus, als "Mode 2" bezeichnet, eine große Reichweite bei hohem Kalorienverbrauch als durch die Antriebsregelung erreicht wird. Ist ein Anwender erst an die typische Wiedergabe der Charakteristikwerte in dem Netzdiagramm 40 gewohnt, so kann die Eigenschaft oder Charakteristik eines Unterstützungsmodus von einem Anwender auf einen Blick erkannt werden. Gerade da ein Systemverhalten bei der Antriebsregelung nicht linear von den einstellbaren Antriebsparametern abhängt, ist eine solche visuelle Darstellung als Feedback vorteilhaft, da aus diesem die Auswirkungen einer Konfiguration hervorgeht.

Ein Algorithmus berechnet unmittelbar die Auswirkungen eines geänderten Wertes eines Antriebsparameters auf das Fahrverhalten des Fahrrads 2 und berechnet damit auch die Charakteristikwerte. In dem Diagramm, welches hier beispielhaft als Netzdiagramm 40 gewählt ist, werden die Auswirkungen der geänderten Werte auf das Gesamtverhalten des Systems visualisiert. Wird beispielsweise in dem ersten Unterstützungsmodus, beispielsweise einem Eco-Modus, welcher einen geringen Unterstützungsfaktor aufweist, der maximale Drehmoment auf 60 nm abgesenkt, so bleibt dies ohne Auswirkung auf das Systemverhalten, da dieser Unterstützungsmodus systemseitig nie 60 nm erreichen wird. Dies kann über ein solches Diagramm dargestellt werden. Somit kann der Anwender über das Diagramm sehen, ab welcher Schwelle ein Wert eines Antriebsparameters tatsächlich die Antriebsregelung signifikant beeinflusst.

Wird beispielsweise die Unterstützung erhöht, so werden sich Stärke, Leistung und Spaßfaktor erhöhen. Gleichzeitig werden jedoch die Reichweite und Kalorienverbrauch dadurch verringert.

Es sei angenommen, dass die Werte der Antriebsparameter V1 - V4 durch den Anwender eingestellt werden können, jedoch durch vordefinierte Werte des konfigurierten Unterstützungsmodus, im Folgenden als Basiswerte bezeichnet, ebenfalls Einfluss auf die Charakteristikwerte eines Unterstützungsmodus genommen wird. Eine beispielhafte Berechnungsvorschrift zum Errechnen eines Charakteristikwertes, hier der Stärke, lautet wie folgt:

$$\text{Stärke} = (a * f(Agility_{UDAM}, AgilityA_{ssistMode}) + b * f(Assistance_{UDAM}, AssistanceA_{ssistMode})) * f(\text{Max TorqueUDAM}, MaxTorque_{ProductLine})$$

$$\text{Stärke} = (0.2 * Min(Agility_{UDAM} * Agility_{AssistMode}, 5) + 0.8 * Min(AssistanceUDAM * AssistanceAs_{sistMode}, 5) * \frac{\text{Max TorqueUDAM}}{MaxTorque_{ProductLine}}$$

Dabei erfolgt durch den wählbaren Parameter a eine Gewichtung einer ersten Funktion, welche von der Agilität des Unterstützungsmodus abhängig ist, und durch den wählbaren Parameter b eine Gewichtung einer zweiten Funktion, welche von dem Unterstützungsgrad des Unterstützungsmodus abhängig ist. Die Summer aus der ersten und zweiten Funktion wird mit einer dritten Funktion multipliziert, um den Charakteristikwert für die Stärke zu ermitteln. Die dritte Funktion ist eine Funktion, die von dem maximalen Drehmoment abhängig ist.

Die erste Funktion ist abhängig von der durch den Anwender eingestellten Agilität und der für diesen Unterstützungsmodus als Basiswert hinterlegen Agilität. Dies kann beispielsweise durch eine Multiplikation dieser Werte erfolgen, wobei die erste Funktion abhängig von dem sich ergebenden Produkt ist. In der gegebenen Formel ist der Wert "AgilityUDAM" eine Agilität, welche als Antriebsparameter durch einen Anwender konfiguriert wird, also der erste Wert V1. Der Parameter "AgilitätAssistMode" ist ein für diesen Unterstützungsmodus fest hinterlegter Basiswert. Die erste Funktion ist insbesondere eine Auswahl eines Minimums aus dem Produkt von der durch den Anwender konfigurierten Agilität und dem Basiswert sowie einem den Wertebereich der Agilität definierenden Maximalwert, der zuvor beispielhaft zu "5" gewählt ist.

Die zweite Funktion ist abhängig von dem durch den Anwender eingestellten Unterstützungsgrad und dem für diesen Unterstützungsmodus als Basiswert hinterlegen Unterstützungsgrad. Dies kann beispielsweise durch eine Multiplikation dieser Werte erfolgen, wobei die zweite Funktion abhängig von dem sich ergebenden Produkt ist. In der gegebenen Formel ist der Wert "MaxTorqueUDAM" ein Unterstützungsgrad, welcher als Antriebsparameter durch einen Anwender konfiguriert wird, also der zweite Wert V2. Der Wert "MaxTorqueAssist Mode" ist ein für den Unterstützungsmodus fest hinterlegter Basiswert. Die dritte Funktion ist insbesondere eine Auswahl eines Minimums aus dem Produkt des durch den Anwender konfigurierten Unterstützungsgrades und dem Basiswert sowie einem den Wertebereich des Unterstützungsgrads definierenden Maximalwert, der zuvor beispielhaft zu "5" gewählt ist.

Die dritte Funktion ist abhängig von dem durch den Anwender eingestellten maximalen Drehmoment und dem für den Unterstützungsmodus als Basiswert hinterlegen maximalen Drehmoment. Dabei ist die dritte Funktion eine Division dieser Werte, also eine Division des durch den Anwender eingestellten maximalen Drehmoments, also des dritten Wert V3, durch den Basiswert. Der Basiswert für das maximale Drehmoment ist dabei ein für das Fahrrad 2 technisch zulässiger Maximalwert.

Um unterschiedliche Unterstützungsmodi auf das Steuersystem 1 zu bringen, ist eine Konfigurationsplattform vorteilhaft, welche beispielsweise auf dem Server 10 betrieben wird. Die Konfigurationsplattform ermöglicht es einem Hersteller, einem OEM oder einem Fahrradhändler, aber auch einem Endkunden, neue Unterstützungsmodi auf das Steuersystem 1 zu spielen oder bestehende Unterstützungsmodi zu aktualisieren. Von wem Zugriff auf das Steuersystem 1 genommen werden kann und wer Zugriff auf die Konfigurationsplattform hat, ist dabei eine Konfigurationsoption. Der Konfigurationsplattform wird, beispielsweise von einem Hersteller, eine Vielzahl verfügbarer Unterstützungsmodi bereitgestellt, indem diese Vielzahl verfügbarer Unterstützungsmodi inclusive der zugehörigen Antriebsparameter auf den Server 10 geladen werden. So werden beispielsweise alle von einem Hersteller konfigurierten Unterstützungsmodi für alle Fahrradtypen und Modelle auf der Konfigurationsplattform bereitgestellt.

Die Konfigurationsplattform ist dazu eingerichtet, eine Auswahl von mehreren Unterstützungsmodi aus dieser Vielzahl verfügbarer Unterstützungsmodi auszuführen, um einen Pool von Unterstützungsmodi zu definieren. Dazu wird eine Filterung ausgeführt, welche basierend auf einem Filterparameter erfolgt. So wird beispielsweise die Vielzahl verfügbarer Unterstützungsmodi dahingehend gefiltert, das Unterstützungsmodi für eine bestimmte Produktlinie, eine bestimmte Region, einen bestimmten Fahrradtyp oder auch für eine gewünschte Geschwindigkeit bereitgestellt werden. Die Filterkriterien sind dabei bevorzugt von einem Anwender einstellbar und/oder von dem Hersteller für einen Anwender definiert.

Die Unterstützungsmodi, die den Filterkriterien entsprechen, werden in den Pool von Unterstützungsmodi aufgenommen und dem Anwender dargestellt. In einem folgenden Schritt wird nun dem Anwender eine Auswahl von mehreren Unterstützungsmodi aus dem Pool von Unterstützungsmodi ermöglicht. Die von dem Anwender ausgewählten Unterstützungsmodi werden über eine Schnittstelle auf die Bedieneinheit 4 des Steuersystems 1 übertragen. Die Schnittstelle ist dabei eine Telekommunikationsschnittstelle der Konfigurationsplattform, welche insbesondere direkt oder über ein mobiles Endgerät, wie beispielsweise das Smartphone 5, eine Verbindung zu dem Steuersystem 1 erlaubt.

Dem Anwender wird optional die Möglichkeit gegeben, bei der Auswahl von mehreren Unterstützungsmodi aus dem Pool von Unterstützungsmodi ebenfalls eine Auswahl zu treffen, welcher der aus dem Pool von Unterstützungsmodi ausgewählten Unterstützungsmodi über die Bedienungsschnittstelle 7a auswählbar sind. Optional ist es für einen Anwender dabei möglich, einen Unterstützungsmodus aus dem Pool von Unterstützungsmodi zu modifizieren, also die für diesen Unterstützungsmodus hinterlegten Antriebsparameter zu ändern. Wurden mehr Unterstützungsmodi aus dem Pool von Unterstützungsmodi auf das Steuersystem 1 geladen, als über die Bedienungsschnittstelle 7a auswählbar sind, so ist es mittels der Konfigurationsschnittstelle 7b möglich, diese Auswahl zu ändern und andere Unterstützungsmodi über die Bedienungsschnittstelle 7a auswählbar zu machen.

Optional umfasst die Schnittstelle eine kabelgebundene Schnittstelle, welche insbesondere zwischen einem lokalen Computer und dem Steuersystem 1 hergestellt wird, wobei der lokale Computer die dafür notwendigen Informationen über das Telekommunikationsnetzwerk 9 von dem Server 10 bezieht. Damit ist es möglich, dass das Steuersystem 1 einige oder alle der Unterstützungsmodi aus dem Pool von Unterstützungsmodi mit den dafür konfigurierten Antriebsparametern empfängt.

Die Bedieneinheit 4 umfasst eine Schnittstelle zu der Konfigurationsplattform und ist dazu eingerichtet, eine erste Anzahl an Unterstützungsmodi mit zugehörigen Antriebsparametern für über die Schnittstelle zu empfangen und zu speichern. Um eine direkte Kommunikation mit dem Server 10 zu ermöglichen, ist die Schnittstelle insbesondere eine Schnittstelle zu einem Telekommunikationsnetzwerk, insbesondere eine Internetschnittstelle.

Die Bedieneinheit 4 ist dazu eingerichtet, eine Auswahl von einem Anwender zu empfangen, insbesondere über die Konfigurationsschnittstelle 7b, durch welche eine Auswahl einer zweiten Anzahl von Unterstützungsmodi aus der ersten Anzahl von Unterstützungsmodi erfolgt, wobei die zweite Anzahl an Unterstützungsmodi für eine Auswahl während einem Betrieb des Fahrrads 2 über die Bedienungsoberfläche 7a bereitgestellt wird. Das bedeutet mit anderen Worten, dass durch das Steuersystem 1 von der Konfigurationsplattform eine Vielzahl von Unterstützungsmodi empfangen wird, die den Unterstützungsmodi aus dem Pool von Unterstützungsmodi oder einer Auswahl aus diesen entspricht. Es sind jedoch nicht alle dieser Unterstützungsmodi sofort über die Bedienungsschnittstelle 7a selektierbar, da durch diese möglicherweise nur weniger Unterstützungsmodi bereitgestellt werden können. Daher ist es vorteilhaft, wenn durch den Anwender eine Auswahl erfolgt, welcher der Unterstützungsmodi über die Bedienungsoberfläche 7a während einem Betrieb des Fahrrads 2 selektierbar sind. Dies erfolgt bevorzugt über die Konfigurationsschnittstelle 7b.

Bevorzugt wird der Pool von Unterstützungsmodi auf dem Server 10 gespeichert und mit einer Kennung versehen, welche dem Steuersystem 1 individuell zugeteilt ist. Das Steuersystem 1 ist bevorzugt dazu eingerichtet, automatisch eine Verbindung zu dem Server 10 aufzubauen und zu prüfen, ob die Unterstützungsmodi aus dem Pool von Unterstützungsmodi oder die ausgewählten Unterstützungsmodi aus dem Pool von Unterstützungsmodi verändert wurden und entsprechend die lokal in dem Steuersystem 1 gespeicherten Unterstützungsmodi zu aktualisieren oder neue Unterstützungsmodi herunterzuladen. Ebenfalls können auf diese Weise einzelne Unterstützungsmodi wieder von dem Steuersystem 1 entfernt werden, was beispielsweise notwendig sein könnte, falls Probleme mit bestimmten Einstellungen eines Unterstützungsmodus auftreten sollten.

Optional ist es auf der Konfigurationsplattform möglich, dass einzelne Unterstützungsmodi in dem Pool von Unterstützungsmodi als kommerziell erwerbbar markiert sind. Solche Unterstützungsmodi werden nicht auf das Steuersystem 1 übertragen oder werden auf das Steuersystem 1 übertragen, sind jedoch nicht über die Bedienungsschnittstelle 7a selektierbar. Damit dies möglich wird, muss der Unterstützungsmodus zunächst explizit für ein bestimmtes Steuersystem 1 oder von einem Zwischenhändler für den weiteren Vertrieb erworben werden und wird dann auf Seiten des Servers 10 oder auf Seiten des Steuersystems 1 freigeschaltet werden. Erst wenn der Unterstützungsmodus über die Konfigurationsplattform oder über die Konfigurationsschnittstelle 7b, beispielsweise durch Eingabe eines Lizenzschlüssels, freigegeben wird, so wird diese dauerhaft über die Bedienungsschnittstelle 7a selektierbar.

Dabei ist es insbesondere vorteilhaft, wenn auch eine Testfunktion hinterlegt ist, welche es ermöglicht, dass ein Unterstützungsmodus über die Schnittstelle auf die Bedieneinheit 4 übertragen wird und dort für einen begrenzten Zeitraum nutzbar ist.

Es wird somit ermöglicht, dass Hersteller oder OEMs eine größere Anzahl an Unterstützungsmodi bereitstellen können, um Händlern und Radfahrern eine Individualisierung des Fahrrads 2 zu ermöglichen. Die Auswahl von Unterstützungsmodi für den richtigen Fahrradtypen ist zeitaufwendig und wird durch die Konfigurationsplattform verkürzt, damit der Hersteller (OEM) eine passende Auswahl an Unterstützungsmodi für die entsprechende FahrradKategorie in kurzer Zeit zur Verfügung hat.

Dem Hersteller wird ermöglicht, eine Vorauswahl an Unterstützungsmodi zu treffen, die der Kunde beim Fahren schalten kann, um sich in der Auswahl der Unterstützungsmodi zu differenzieren. Es wird zudem ermöglicht, für Fahrradkategorien Unterstützungsmodi zu definieren, die auf allen Rädern der Kategorie verfügbar sind, damit einem Händler oder Endkunden ein Vergleich oder Fehleranalyse des Fahrrades ermöglicht wird, unabhängig von der Auswahl eines Herstellers (OEM). Der Hersteller (OEM) erhält die Möglichkeit, markenspezifische Unterstützungsmodi anzubieten und diese für seine Marke und Fahrradkategorie bereitzustellen.

Der Hersteller (OEM) und somit auch der Endanwender soll stets die aktuelle Unterstützungsmodi zur Auswahl für die Konfiguration zur Verfügung haben. Es wird ermöglicht, dass eine große Anzahl an Unterstützungsmodi verwaltet und bereitgestellt werden kann. Der Hersteller (OEM) kann entscheiden, ob weitere Unterstützungsmodi hinzugefügt werden können. Der Hersteller (OEM) kann entscheiden ob Assistance Modes auf einem Fahrrad durch den Endkunden (ODAM) modifiziert werden können. Der Fahrrad Händler kann die Unterstützungsmodi anpassen und damit dem Kunden ein perfekt auf ihn zugeschnittenes Fahrrad 2 anbieten können.

Der Endkunde kann Unterstützungsmodi ohne Internetverbindung tauschen, um so die perfekt für die Situation richtigen Unterstützungsmodi schalten können, beispielsweise indem dieser andere Unterstützungsmodi für die Fahrt zum Einkaufen als für den eMTB trail in der Benutzungsschnittstelle 7a durch die Konfigurationsschnittstelle 7b bereitstellt. Auch wird eine Aktualisierung von Unterstützungsmodi ermöglicht, wenn ein Softwareupdate dies notwendig macht.

Somit wird eine weitergehende Individualisierung durch die Verwaltung einer größeren Auswahl von Unterstützungsmodi erreicht. Unterstützungsmodi können durch gezielt definierte Gruppen von Anwendern für ein bestimmtes Steuersystem 1 bereitgestellt, getauscht und modifiziert werden.

Dabei ist auch eine Implementierung von In-App Käufen vorteilhaft, die es einem Anwender ermöglicht, neue Unterstützungsmodi über ein Smartphone 5, beispielsweise mittels der Konfigurationsschnittstelle 7b, zu erwerben und für eine Auswahl über die Benutzungsschnittstelle auszuwählen.

Es können bevorzugt mehr Unterstützungsmodi auf dem Steuersystem 1 des Fahrrads 2 gespeichert werden, als von einem Anwender zur Verwendung gewählt werden können.

Durch das Steuersystem 1 wird bevorzugt ein Verfahren zum automatischen Wechsel zwischen den auswählbaren Unterstützungsmodi ausgeführt. So ist das Steuersystem 1 dazu eingerichtet, einen automatischen Wechsel zwischen unterschiedlichen auswählbaren Unterstützungsmodi auszuführen, damit die Antriebsregelung nach dem Wechsel basierend auf dem Satz von Antriebsparametern von dem Unterstützungsmodus erfolgt, zu dem gewechselt wurde.

So wird das elektrische Fahrrad 2 beispielsweise von einem Anwender benutzt, wobei der erste Unterstützungsmodus ausgewählt ist und die Antriebsregelung erfolgt auf dem Satz von Antriebsparametern des ersten Unterstützungsmodus. Durch das Steuersystem 1 wird kontinuierlich geprüft, ob eine Bedingung eintritt, bei deren Eintreten ein Wechsel zu einem alternativen Unterstützungsmodus ausgeführt werden soll. Tritt die Bedingung ein, so wird der Unterstützungsmodus gewechselt und die Antriebsregelung erfolgt basierend auf dem Satz von Antriebsparametern, der dem alternativen Unterstützungsmodus zugehörig ist, zu dem gewechselt wurde. So wird beispielsweise automatisch von dem ersten Unterstützungsmodus zu einem zweiten Unterstützungsmodus gewechselt, wenn die Bedingung eintritt. Entsprechend erfolgt die Antriebsregelung nach dem Wechsel auf dem Satz von Antriebsparametern des zweiten Unterstützungsmodus.

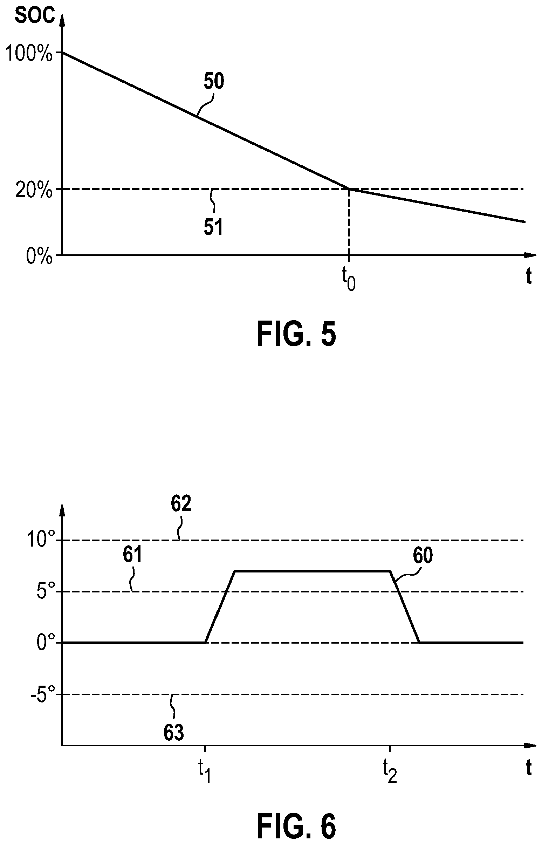

Die Bedingung ist dabei optional mittels der Konfigurationsschnittstelle 7b konfigurierbar. So ist es beispielsweise möglich, dass ein Anwender vor einer Fahrt mit dem elektrischen Fahrrad 2 mittels des Smartphones 5 eine Auswahl tätigt, durch welche die Bedingung ausgewählt wird, bei welcher ein Wechsel zwischen unterschiedlichen Antriebsunterstützungsmodi während der Fahrt erfolgt. Beispielhafte Bedingungen, welche bevorzugt auch durch einen Anwender konfigurierbar sind, sind beispielhaft in den Figuren 5 und 6 beschrieben.

Bei dem in Figur 5 gezeigten Beispiel ist die Bedingung ein Schwellenwert 51 eines Ladungszustandes. Der Ladungszustand wird auch als "State of Charge", also SOC, bezeichnet. Der Schwellenwert 51 ist dabei von einem Anwender zu 20% gewählt worden. Der Wert von 20% ist hierbei als beispielhaft anzusehen, da von dem Anwender auch andere Werte, bevorzugt innerhalb eines vordefinierten Intervalls, konfiguriert werden können. In Figur 5 ist ein Ladungszustandsverlauf 50 über die Zeit bei einem Betrieb des elektrischen Fahrrads 2 gezeigt. Bei einem Beginn der Fahrt ist der Ladungszustand 100%. Dieser fällt jedoch über die Betriebsdauer des elektrischen Fahrrads 2 hinweg ab, bis dieser zu einem Zeitpunkt t0 gleich dem durch den Anwender konfigurierten Schwellenwert 51 ist. Durch das Steuersystem 1 wird erkannt, dass die Bedingung eingetreten ist, zu der ein automatischer Wechsel zwischen unterschiedlichen Unterstützungsmodi ausgeführt werden soll. Zu dem Zeitpunkt t0 wird daher von einem ersten Unterstützungsmodus zu dem vierten Unterstützungsmodus 24 gewechselt. So wird beispielsweise auf einen energiesparenderen Unterstützungsmodi gewechselt. So wird beispielsweise von einem Turbo-Modus auf einen Eco-Modus gewechselt. Nach dem Zeitpunkt t0 wird das elektrische Fahrrad 2 durch den Fahrregler 3 in dem zweiten Unterstützungsmodus betrieben und eine dem zweiten Unterstützungsmodus entsprechende Antriebsregelung durch den Fahrregler 3 ausgeführt. Steigt der Ladezustand zu einem späteren Zeitpunkt wieder an und liegt wieder über dem Schwellenwert 51, so wird der Unterstützungsmodus optional wieder auf den Unterstützungsmodus zurückgesetzt, der vor dem Wechsel zu dem Zeitpunkt t0 aktiv war.

Bei dem in Figur 6 gezeigten Beispiel ist die Bedingung ein erster Schwellenwert 61 einer vorliegenden Steigung. Die Steigung ist dabei bevorzugt eine Steigung einer Fahrbahnoberfläche, auf welcher das elektrische Fahrrad 2 sich befindet, wobei die Steigung beispielsweise über einen Neigungssensor des Steuersystems 1 erfasst wird. Der Schwellenwert 61 ist dabei von einem Anwender zu 5 Grad gewählt worden. Der Wert von 5 Grad ist hierbei als beispielhaft anzusehen, da von dem Anwender auch andere Werte, bevorzugt innerhalb eines vordefinierten Intervalls, konfiguriert werden können. In Figur 6 ist ein Steigungsverlauf 30 bei einem Betrieb des elektrischen Fahrrad 2 über einen zeitlichen Verlauf dargestellt. So wird das elektrische Fahrrad 2 anfänglich bei einer Steigung von 0 Grad betrieben, wobei eine Antriebsregelung des elektrischen Fahrrads 2 gemäß einem ersten Unterstützungsmodus erfolgt. Zu einem ersten Zeitpunkt t1 wird durch den Neigungssensor des Steuersystems 1 ein Anstieg der Steigung erfasst. Dabei Steigt die Steigung auf über 5 Grad an und überschreitet somit den konfigurierten Schwellenwert 61. Es wird somit automatisch von einem ersten Unterstützungsmodus in einen zweiten Unterstützungsmodus gewechselt, indem beispielsweise eine stärkere Unterstützung des Anwenders durch den Motor 11 erfolgt. Bei dem in Figur 6 dargestellten Beispiel fällt die Steigung zu einem zweiten Zeitpunkt t2 wieder ab, wodurch ein automatischer Wechsel von dem zweiten Unterstützungsmodus zurück in den ersten Unterstützungsmodus erfolgt.

Bevorzugt können dabei mehrere Bedingungen, beispielsweise mehrere Schwellenwerte 61, 62 durch den Anwender konfigurierbar sein. So wird beispielsweise der erste Schwellenwert 61 bei 5Grad und ein zweiter Schwellenwert 62 bei 10 Grad gesetzt wird. So könnte beispielsweise bei einem weiteren Ansteigen des Steigungswinkels auf einen Wert über 10 Grad ein automatischer Wechsel auf einem dritten Unterstützungsmodus erfolgen, bei dem eine stärkere Unterstützung des Anwenders durch den Motor 11 erfolgt, als in dem zweiten Unterstützungsmodus. Optional ist ein dritter Schwellenwert 63 bei -5 Grad gesetzt. So wird beispielsweise bei einem Abfall des Steigungswinkels auf einen Wert unter -5 Grad ein automatischer Wechsel auf einem vierten Unterstützungsmodus erfolgen, bei dem eine schwächere Unterstützung des Anwenders durch den Motor 11 erfolgt, als in dem ersten Unterstützungsmodus. Beispielsweise wird in einen ECO oder Tourenmodus gewechselt.

Einige oder alle der Schwellenwerte 60, 61, 62 sind optional durch den Anwender mittels der Konfigurationsschnittstelle 7b konfigurierbar.

Der automatische Wechsel zwischen unterschiedlichen Unterstützungsmodi wird auch als "Automatic Mode Change" bezeichnet. Der automatische Wechsel kann durch den Anwender aktiviert und deaktiviert werden, beispielsweise über eine der Bedienungsschnittstelle 7a oder die Konfigurationsschnittstelle 7b. Bei aktivierten automatischem Wechsel wechselt das Steuersystem 1 automatisch zwischen den existierenden Unterstützungsmodi. Auf einer Anzeige der Bedieneinheit 4, welche die Bedienungsschnittstelle 7a darstellt, sieht der Anwender den aktuell aktiven Unterstützungsmodus. Somit hat er stets Rückmeldung in welchem ihm bereits bekannten Unterstützungsmodus das Steuersystem 1 sich befindet. In einer Konfiguration sind die Bedingungen hinterlegt, auf deren Basis der automatische Wechsel erfolgt. Diese Konfiguration kann z.B. über eine App, die auf dem Smartphone 5 ausgeführt wird, konfiguriert und zu dem Fahrregler 3 des elektrischen Fahrrads 2 übertragen werden.

Für verschiedene Größen Steuersystems 1 können Bedingungen definiert und miteinander gekoppelt werden. So wird beispielsweise in einem energiesparenden Unterstützungsmodus gewechselt, wenn ein Ladungszustand unter 20% abfällt. Diese Bedingung ist optional mit einer hohen Priorität gekennzeichnet und wird als bevorzugtes Entscheidungskriterium herangezogen.

Zusätzlich können weitere Bedingungen konfiguriert sein. So wird beispielsweise bei einer Steigung unter 5Grad ein Unterstützungsmodus ausgewählt, der eine Unterstützung bereitstellt, durch welche besonders lange Strecken zurückgelegt werden kann. So wird beispielsweise ein Tour-Modus ausgewählt. Steigt die Steigung über 5Grad an, so wird in einen stärker unterstützenden Unterstützungsmodus gewechselt, beispielsweise in einen Sport-Modus. Steigt die Steigung weiter an, beispielsweise über 10Grad, so wird in einen noch stärkeren Unterstützungsmodus, beispielsweise in einen Turbo-Modus gewechselt.

Werden für unterschiedliche Eingangsgrößen Bedingungen gewählt, so können optional Prioritäten definiert werden. So wird beispielsweise trotz einer großen Steigung über 10 Grad dennoch der energiesparende Unterstützungsmodus gewählt, wenn die Auswahl eines Schwellenwerts für den Ladungszustand als Bedingung priorisiert ist. Durch eine Priorisierung der Bedingungen können auf diese Weise beispielweise die in den Figuren 5 und 6 beschriebenen Bedingungen kombiniert werden.

Der zuvor mit den Figuren 5 und 6 beschriebene automatische Wechsel zwischen unterschiedlichen Betriebsmodi basierend auf dem Ladungszustand und basierend auf einer vorliegenden Steigung ist vorteilhaft, ist jedoch nur als eine beispielhafte Wahl der Bedingung anzusehen. Alternative oder zusätzliche Bedingungen können sich basierend auf den folgenden Parametern ergeben: Fahrerpuls, mittlere Fahrerleistung, Geschwindigkeit, Kadenz und/oder gewähltes Übersetzungsverhältnis. So legt ein Anwender beispielsweise einen leichteren Gang ein, wenn eine große Steigung vorliegt. Infolge darauf wird ein automatischer Wechsel zu einem stärkeren Unterstützungs-Modus ausgeführt.

Der Anwender kann auf vordefinierte Konfiguration zurückgreifen oder eigene Konfigurationen erstellen und die Bedingungen nach seinen Wünschen anpassen.

Alternativ oder zusätzlich ist das Steuersystem 1 dazu eingerichtet, ein Fahrverhalten eines Anwenders bei einem Betrieb des elektrischen Fahrrads 2 zu erkennen oder zu analysieren und den Satz von Antriebsparametern, basierend auf dem erkannten Fahrverhalten anzupassen oder einen neuen Satz von Antriebsparametern zu erstellen oder vorzuschlagen.

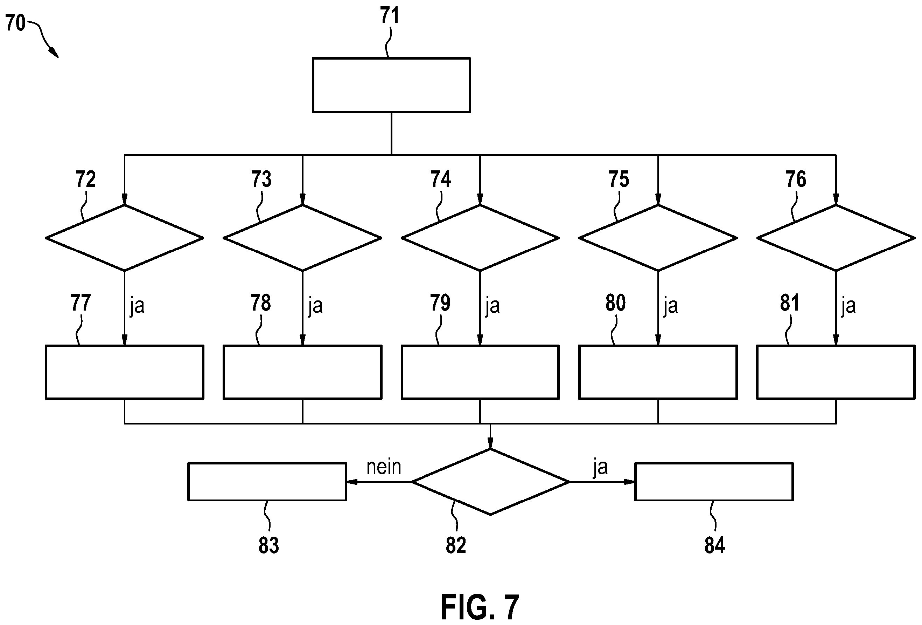

Das Erstellen oder Anpassen der Antriebsparameter für einen Unterstützungsmodus erfolgt dabei beispielsweise durch das in Figur 7 dargestellte Verfahren.

Bei dem in Figur 7 dargestellten Verfahren 70 erfolgt zunächst in einem ersten Verfahrensschritt 71 ein Erstellen eines neuen Unterstützungsmodus durch einen Anwender oder es wird eine Anforderung bereitgestellt, dass ein bestehender Unterstützungsmodus modifiziert werden soll.

Im Folgenden wird bei einem Betrieb des Fahrrads 2 eine Analyse des Fahrverhaltens des Anwenders ausgeführt. Dazu wird in einem ersten bis fünften Analyseschritt 72 bis 76 parallel unterschiedliche Charakteristiken des Fahrverhaltens kontinuierlich erfasst und analysiert.

So wird in einem ersten Analyseschritt 72 detektiert, mit welcher Geschwindigkeit das elektrische Fahrrad 2 typischerweise gefahren wird und somit eine Wohlfühlgeschwindigkeit festgelegt. Wurde eine solche Wohlfühlgeschwindigkeit detektiert, so wird in Reaktion darauf in einem ersten Anpassungsschritt 77 vorgeschlagen, eine Geschwindigkeitsempfehlung auf die Wohlfühlgeschwindigkeit festzulegen bzw. eine Motorunterstützung für diese Geschwindigkeit zu optimieren.

In einem zweiten Analyseschritt 73 wird detektiert, ob ein abruptes Abbrechen eines Tretens bei einem Anfahrvorgang erfolgt. Wird ein solches Verhalten erkannt, so wird in Reaktion darauf in einem zweiten Anpassungsschritt 78 eine Reduktion eines Dynamikfaktors und/oder eines Unterstützungsfaktors für den Unterstützungsmodus vorgeschlagen.

In einem dritten Analyseschritt 74 wird detektiert, ob ein sehr hohes Fahrerdrehmoment beim Fahren vorliegt, also das Fahrerdrehmoment über einem vorgegebenen Schwellenwert liegt. Ist dies der Fall, so wird in Reaktion darauf in einem dritten Anpassungsschritt 79 dem Anwender eine Erhöhung eines Unterstützungsfaktors und eines maximalen Motordrehmoments für den aktiven Unterstützungsmodus vorgeschlagen. Optional oder zusätzlich wird in dem dritten Anpassungsschritt 79 eine Herzfrequenz des Anwenders erfasst und in dem dritten Anpassungsschritt 79 eine Anpassung des Unterstützungsfaktors und maximalen Motordrehmoments basierend auf der Herzfrequenz vorgeschlagen. So kann beispielsweise bei einer sehr hohen Herzfrequenz eine Erhöhung des Unterstützungsfaktors oder des maximalen Motordrehmoments vorgeschlagen werden.

In einem vierten Analyseschritt 75 wird detektiert, ob durchgängig ein sehr niedriger Fahrerdrehmoment vorliegt, beispielsweise der Fahrerdrehmoment unterhalb eines vorgegebenen Schwellenwerts liegt. Ist dies der Fall, so wird in Reaktion darauf ein vierter Anpassungsschritt 80 ausgeführt. In diesem vierten Anpassungsschritt 80 wird dem Anwender ein Verringern des Unterstützungsfaktors und des maximalen Motordrehmoments vorgeschlagen.

In einem fünften Analyseschritt 76 wird eine Umgebung mit hohem Fahrwiderstand detektiert. Dies kann beispielsweise mittels einer Standortanalyse oder eines Steigungswinkels erfolgen. Wurde eine Umgebung mit hohem Fahrwiderstand erkannt, so wird in Reaktion darauf ein fünfter Anpassungsschritt 81 ausgeführt, in welchem eine Erhöhung des Unterstützungsfaktors und des maximalen Motordrehmoments vorgeschlagen wird.

Wurde einer der Anpassungsschritten 77 bis 81 ausgeführt, so wird in einem optionalen Bestätigungsschritt 82 dem Anwender eine entsprechende Anpassung des gewählten Unterstützungsmodus oder ein Erstellen eines neuen Unterstützungsmodus vorgeschlagen. Wird dies von dem Anwender bestätigt oder wird der Bestätigungsschritt 82 nicht ausgeführt, so wird in einem Speicherschritt 84 der aktive Unterstützungsmodus entsprechend der in den Anpassungsschritten 77 bis 81 ermittelten Parametern angepasst oder es wird ein neuer Unterstützungsmodus mit den in den Anpassungsschritten 77 bis 81 ermittelten Parametern erstellt. Wird die Speicheranfrage an den Anwender in dem Bestätigungsschritt 82 verneint, so werden alle ermittelten Einstellungen verworfen. Dies erfolgt in einem Löschschritt 83.

Es wird somit ermöglicht, dass dem Anwender eine Einstellung eines Unterstützungsmodus auf Basis des Fahrstils, der Fahrsituationen und weiterer Umgebungsbedingungen vorgeschlagen wird, wobei bevorzugt auch eine Begründung für die vorgeschlagene Änderung mitgeliefert wird. Daraus ergeben sich folgende Vorteile, dass ein Anwender einen leichteren Zugang zu den möglichen Einstellungen findet, dadurch eine Erhöhung der Attraktivität der einstellbaren Antriebsparameter und konfigurierbarer Unterstützungsmodi erreicht wird und durch eingängige Empfehlungen auch komplexere Unterstützungsmodi erstellt werden Unterstützungsmodi.

Vor allem unerfahrene Anwender sind es nicht gewohnt, schneller als eine bestimmte Geschwindigkeit zu fahren. Wird sensorisch erfasst, dass der Anwender immer bei der gleichen Geschwindigkeit aufhört zu pedalieren, kann diese Geschwindigkeit als Antriebsparameter für einen Unterstützungsmodus vorgeschlagen werden. Noch deutlicher kann man dies bergab messen: wird das Fahrrad 2 nicht oberhalb einer gewissen Geschwindigkeit beschleunigt, so kann ziemlich genau die Wohlfühlgrenze des Anwenders ermittelt und entsprechend kommuniziert werden.

Auch kann eine Anpassung eines Unterstützungsfaktors, des Dynamic-Factors und des maximalen Motordrehmoments erfolgen. In verschiedenen Szenarien kann festgestellt werden, ob der Motor zu aggressiv oder zu schwach eingestellt ist. Typischerweise kann man das feststellen, wenn der Anwender in die Pedale tritt, kurz darauf aufhört zu treten, um anschließend mit einem "normalen" Tritt weiterfährt. In diesem Fall kann interpretiert werden, dass am Anfang die Motorunterstützung zu heftig war und der Anwender deswegen aufgehört hat zu treten, um dann anschließend wieder vorsichtiger in die Pedale zu treten. In diesem Fall ist das Anfahren wohl zu stark gewesen sein und eine Reduktion insbesondere des Unterstützungsfaktors und/oder des Dynamic-Factors kann empfohlen werden. Die Reduktion kann so lange empfohlen werden, bis die oben beschriebene Fahrsituation nicht mehr auftritt.

In manchen Fällen kann der Unterstützungsfaktor über die Geschwindigkeit verstellt werden. Im beschriebenen Szenario ist es denkbar, dass empfohlen wird, diesen Unterstützungsfaktor im unteren Geschwindigkeitsbereich zu reduzieren.

Treten auf der anderen Seite sehr hohe Fahrerdrehmomente beim Anfahren oder auch während der Fahrt auf, kann es sinnvoll sein, die oben beschriebenen Faktoren und evtl. zusätzlich das maximale Motordrehmoment zu erhöhen.

Bei leichten Fahrern kommt es vor, dass immer nur sehr kleine Fahrerdrehmomente auftreten und die Maximalgeschwindigkeit sehr schnell erreicht wird. In diesem Fall könnte eine Unterforderung vorliegen und eine Reduktion des Unterstützungsfaktors wird vorgeschlagen.

In den vorangegangenen Szenarien ist eine Variante denkbar, die die Herzfrequenz in dieser Beurteilung mit einbezieht. Wird regelmäßig ein gesundes bzw. Fitnessniveau überschritten, ist der Fahrer mit der aktuellen Einstellung wohl überfordert. In diesem Fall wird eine Empfehlung gegeben, den Unterstützungsfaktor und das maximale Drehmoment zu erhöhen. Es ist auch denkbar, dass ein Unterstützungsmodus anhand der Herzfrequenz allmählich und automatisch geändert werden, wenn der Fahrer diesem zustimmt.

Zuletzt sollen noch die Umgebungsbedingungen betrachtet werden. Wird per GPS, inertialer Sensorik (Beschleunigung oder Drehrate) oder wiederum auf Basis des Fahrerdrehmoments erkannt, dass sich die Untergrundbeschaffenheit ändert und somit beispielsweise ein schwereres Gelände zu erwarten ist, wird wiederum dem Anwender angezeigt, dass eine Erhöhung des Unterstützungsfaktors empfohlen wird. Insbesondere bei GPS, am besten mit bekannter Wegstrecke, besteht der Vorteil darin einzuschätzen, wie lange die Untergrundänderung bestehen bleibt und ob sich somit eine Empfehlung überhaupt lohnt. Zudem kann im Falle eines Trails insbesondere empfohlen werden, dass der Dynamic-Factor in Kombination mit dem Unterstützungsfaktor reduziert wird, um mehr Kontrolle zu haben. Denn ein sehr dynamisches Wiederanfahren könnte dort ungünstig, wenn nicht sogar gefährlich sein.

Ebenfalls GPS/kartengestützt (auch Uhrzeitgestützt) ist es möglich den Arbeitsweg von Freizeitwegen zu unterscheiden und spezielle UDAM-Einstellempfehlungen zu geben. Es ist es meistens gewünscht, möglichst ohne Anstrengung einen Arbeitsweg zurück zu legen, weswegen hier ein hoher Unterstützungsfaktor und ein hoher maximaler Motordrehmoment angebracht sind. In der Freizeit sind oft die Fitness und die Reichweite von größerem Interesse, so dass eine Empfehlung, die zu einer niedrigeren Unterstützung führt, angebracht ist.

Die Änderungen können generell so lange empfohlen werden, bis die oben beschriebene Fahrsituationen nicht mehr auftreten oder der Anwender einem weiteren Vorschlag nicht zustimmt.

Die Umgebungsbedingungen können mit den vorherigen Empfehlungen gekoppelt werden. So sind auf dem Arbeitsweg niedrige Fahrerdrehmomente und -leistungen eher akzeptabel und daher können die Schwellwerte für die Empfehlungen lockerer sein. Ist auf Basis der Inputsignale (z. B. niedriges Drehmoment, niedrige Geschwindigkeiten, zittriger Lenkwinkelausschlag) von einem Anfänger auszugehen, wird empfohlen vor allem den Dynamic-Factor, oder auch den Unterstützungsfaktor zu reduzieren.

Grundsätzlich ist es vorteilhaft, wenn durch einen Anwender neue Unterstützungsmodi erstellt werden können oder bereits existierende Unterstützungsmodi modifiziert werden können. Dies ist über die Konfigurationsschnittstelle 7b möglich.

Bei dem Erstellen eines neuen Unterstützungsmodus ist es notwendig, dass für diesen Unterstützungsmodus die zugehörigen Antriebsparameter, also beispielsweise ein Satz von Antriebsparametern, konfiguriert werden. Soll ein bereits existierender Unterstützungsmodus modifiziert werden, so müssen durch einen Anwender die zugehörigen Antriebsparameter dieses Unterstützungsmodus dazu neu konfiguriert werden.

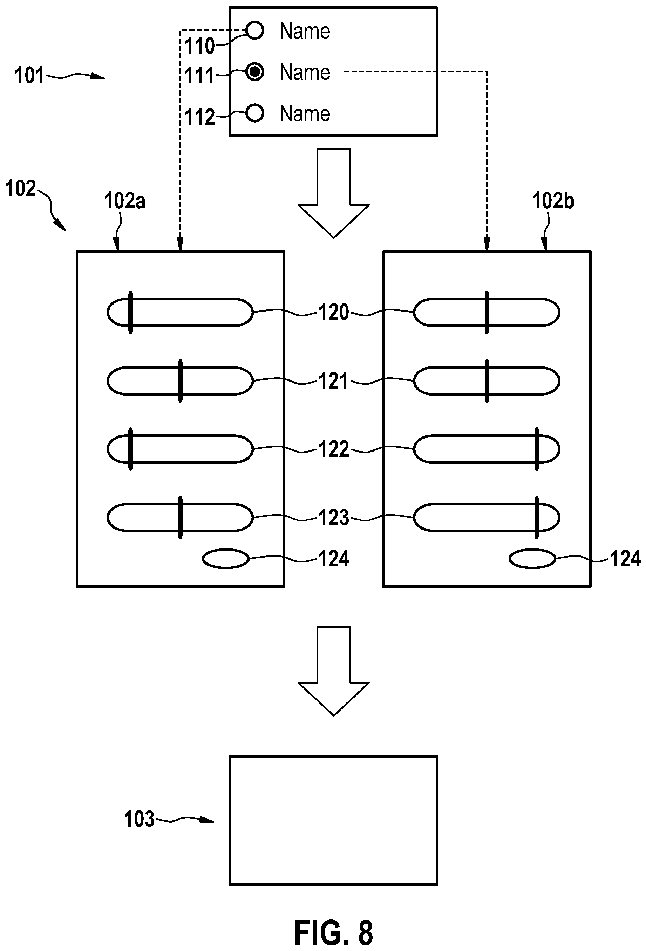

Ein Verfahren, um einem Anwender eine Konfiguration eines neuen Unterstützungsmodus zu erleichtern ist in Figur 8 dargestellt.

Dabei wird dem Anwender in einem ersten Schritt 101 durch die Konfigurationsschnittstelle 7b zunächst die Möglichkeit gegeben, eines von mehreren Voreinstellungs-Profilen 110, 111, 112 auszuwählen, welche ein erstes Voreinstellungs-Profil 110, ein zweites Voreinstellungs-Profil 111 und ein drittes Voreinstellungs-Profil 112 umfassen. Die verfügbaren Voreinstellungs-Profile 110, 111, 112 sind in Fig. 8 beispielhaft mit den Namen "Cruise", "Commute" und "MTB" versehen. Die vergebenen Namen deuten an, zu welchen Eigenschaften in Fahrverhalten das jeweilige Voreinstellungs-Profil führt. So sind beispielsweise in dem als "MTB" bezeichneten Voreinstellungs-Profil 112 solche Antriebsparameter hinterlegt, die zu einem Fahrverhalten des elektrischen Fahrrades 2 führen, das für Bergfahrten besonders geeignet ist. Es sind durch jedes der Voreinstellungs-Profile Voreinstellungen für Antriebsparameter eines Unterstützungsmodus definiert.

Für jedes der Voreinstellungs-Profile 110, 111, 112 sind Voreinstellungen für Antriebsparametern eines Unterstützungsmodus hinterlegt.

Wurde von einem Anwender eines der Voreinstellungs-Profile 110, 111, 112 gewählt, so wird dem Anwender in einem zweiten Schritt 102 durch die Konfigurationsschnittstelle 7b die Möglichkeit gegeben, die einzelnen Antriebsparameter weiter zu modifizieren. Dazu werden dem Anwender beispielsweise mehrere Schieberegler 120 - 123 angezeigt, wobei durch jeden der Schieberegler 120 - 123 ein Antriebsparameter konfiguriert bzw. modifiziert werden kann. So wird einem Anwender beispielsweise ein erster Schieberegler 120 angezeigt, durch welchen ein erster Antriebsparameter eingestellt werden kann, ein zweiter Schieberegler 121 angezeigt, durch welchen ein zweiter Antriebsparameter eingestellt werden kann, ein dritter Schieberegler 122 angezeigt, durch welchen ein dritter Antriebsparameter eingestellt werden kann, und ein vierter Schieberegler 123 angezeigt, durch welchen ein vierter Antriebsparameter eingestellt werden kann. Die Position des Schiebereglers entspricht dabei der Konfiguration des zugehörigen Antriebsparameters.

Wurde von dem Anwender eines der Voreinstellungs-Profile 110, 111, 112 ausgewählt, so werden die Antriebsparameter für den neu erstellten Unterstützungsmodus initial entsprechend der für das gewählte Voreinstellungs-Profil 110, 111, 112 hinterlegten Voreinstellungen für Antriebsparameter gesetzt. Die initiale Position der Schieberegler wird entsprechend dargestellt.

So ist aus Figur 8 beispielhaft ersichtlich, dass die Auswahl des ersten Voreinstellungs-Profils 110 durch den Anwender zu einer ersten Konfiguration 102a der Antriebsparameter für den neu erstellten Unterstützungsmodus führt und die die Auswahl des zweiten Voreinstellungs-Profils 111 durch den Anwender zu einer zweiten Konfiguration 102b der Antriebsparameter für den neu erstellten Unterstützungsmodus führt. Dies ist aus den unterschiedlichen Positionen der Schieberegler 120 - 123 ersichtlich. Es werden somit bei dem Erstellen eines neuen Unterstützungsmodus die dem neuen Unterstützungsmodus zugehörigen Antriebsparameter gemäß den Voreinstellungen eines der hinterlegten Voreinstellungs-Profile gesetzt.

Der Anwender kann nun eine finale Konfiguration ausführen, indem dieser die Schieberegler in gewünschter Weise verschiebt. Die gemäß dem ausgewählten Voreinstellungs-Profil gesetzten Antriebsparameter sind somit durch den Anwender modifizierbar. Bei Bedarf können die Einstellungen durch Betätigung einer Reset-Taste 124 auf die dem ausgewählten Voreinstellungs-Profil zugehörigen Voreinstellungen zurückgesetzt werden. In entsprechender Weise können auch bereits existierende Unterstützungsmodi basierend auf den Voreinstellungs-Profils 110, 111, 112 konfiguriert werden. Somit werden auch bei einem Modifizieren von Antriebsparametern eines zu modifizierenden Unterstützungsmodus die dem zu modifizierenden Unterstützungsmodus zugehörigen Antriebsparametern gemäß den Voreinstellungen eines der hinterlegten Voreinstellungs-Profile gesetzt.

Wurde die finale Konfiguration ausgeführt, so wird das Ergebnis gespeichert und in einem dritten Schritt 103 dem den Fahrregler 3, bereitgestellt. Basierend auf den konfigurierten Antriebsparametern werden Steuerwerte ermittelt, welche eine Antriebsregelung des Motors 11 des Fahrrads 2 genutzt werden. In welcher Weise die Antriebsparameter in die Steuerwerte übersetzt werden kann von Kalibrierwerten, werksseitig konfigurierbaren Einstellungen und Software-Eigenschaften abhängen.

In dem zuvor beschriebenen Beispiel wird eines der mehreren Voreinstellungs-Profile basierend auf Auswahl eines Anwenders über die Konfigurationsschnittstelle 7b gewählt. Jedoch kann dies Auswahl auch auf alternative Weisen erfolgen.

So wird alternativ eines der mehreren Voreinstellungs-Profile basierend auf einer Kategorie des elektrischen Fahrrads gewählt. So wird beispielsweise automatisch das dritte Voreinstellungs-Profil 112 ausgewählt, wenn das elektrische Fahrrad 2 ein Mountainbike ist.

Alternativ dazu wird eines der mehreren Voreinstellungs-Profile basierend auf einem aktiven Nutzerprofil gewählt wird. So können für die Verwendung des elektrischen Fahrrads 2 mehrere Nutzer konfiguriert sein, denen unterschiedliche Nutzerprofile zugehörig sind. Basierend auf einem gerade verwendeten Nutzerprofil erfolgt spezifisch für einen der Nutzer die Auswahl des Voreinstellungs-Profils.

Alternativ dazu wird eines der mehreren Voreinstellungs-Profile basierend auf einem Ergebnis eines Frage und Antwort Dialog gewählt wird, wobei einem Anwender mehrere Fragen vorgegeben werden und basierend auf eingegebenen Antworten des Anwenders das Voreinstellungs-Profil gewählt wird. So können beispielsweise Präferenzen eines Anwenders durch den Frage und Antwort Dialog ermittelt werden und basierend darauf die Auswahl des Voreinstellungs-Profils erfolgen.

In jedem Falle wird das gewählte Voreinstellungs-Profil für das Erstellen des neuen Unterstützungsmodus und/oder für das Modifizieren der Antriebsparametern verwendet.

Optional sind Voreinstellungs-Profile über eine Service-Schnittstelle konfigurierbar sind. So kann beispielsweise durch einen Händler oder einen OEM ein spezifisches Voreinstellungs-Profil definiert werden, welches von einem Anwender bei der Konfiguration genutzt wird.

Neben der obigen schriftlichen Offenbarung wird explizit auf die Offenbarung der Figuren 1 bis 8 verwiesen.

**Patentansprüche**

1. Steuersystem (1) für ein elektrisches Fahrrad (2) umfassend eine Bedieneinheit (4), welche dazu eingerichtet ist, einen Fahrregler (3) des elektrischen Fahrrads (2) anzusteuern,

   - wobei die Bedieneinheit (4) dazu eingerichtet ist, einem Anwender über eine Bedienungsschnittstelle (7a) eine Auswahl zwischen mehreren Unterstützungsmodi (21-24) zu ermöglichen, und
   - den Fahrregler (3) derart anzusteuern, dass eine Antriebsregelung für einen Motor (11) des Fahrrads (2) gemäß dem gewählten Unterstützungsmodus erfolgt

   **dadurch gekennzeichnet, dass** die Bedieneinheit (4) dazu eingerichtet ist,

   - für jeden Unterstützungsmodus (21-24) mittels einer Kennzahlberechnungsvorschrift basierend auf den für den jeweiligen Unterstützungsmodus (21-24) hinterlegten Antriebsparametern eine Kennzahl (31-34) zu errechnen und eine Sortierung der Unterstützungsmodi (21-24) basierend auf den für die Unterstützungsmodi (21-24) errechneten Kennzahlen (31-34) auszuführen, oder
   - für jeden Unterstützungsmodus (21-24) die für den jeweiligen Unterstützungsmodus (21-24) hinterlegten Antriebsparametern über eine Schnittstelle bereitzustellen, über die Schnittstelle eine Kennzahl (31-34) zu empfangen und eine Sortierung der Unterstützungsmodi (21-24) basierend auf den für die Unterstützungsmodi (21-24) empfangenen Kennzahlen (31-34) auszuführen.

2. Steuersystem (1) gemäß Anspruch 1, **dadurch gekennzeichnet, dass** das Steuersystem (1) eine Konfigurationsschnittstelle (7b) umfasst, die einem Anwender ein Modifizieren von Antriebsparametern und/oder ein Erstellen von neuen Unterstützungsmodi ermöglicht.

3. Steuersystem (1) gemäß Anspruch 1, **dadurch gekennzeichnet, dass** die Kennzahl (31-34) gemäß der Kennzahlberechnungsvorschrift aus einem für den zugehörigen Unterstützungsmodus (21-24) hinterlegtes maximalen Drehmoment und/oder einem für den zugehörigen Unterstützungsmodus (21-24) hinterlegten Unterstützungsfaktor berechnet wird.

4. Steuersystem (1) gemäß Anspruch 3, **dadurch gekennzeichnet, dass** das maximale Drehmoment und/oder der Unterstützungsfaktor für das berechnen der Kennzahl (31-34) für jeden der Unterstützungsmodi (21-24) für einen gemeinsamen Arbeitspunkt ermittelt werden, wobei der gemeinsame Arbeitspunkt bevorzugt durch einen oder mehrere der folgenden Größen definiert ist: eine Trittfrequenz, einen Fahrerdrehmoment, eine Geschwindigkeit.

5. Steuersystem (1) gemäß Anspruch 4, **dadurch gekennzeichnet, dass** für ein Ermitteln des Arbeitspunktes bevorzugte Werte eines Anwenders für die Trittfrequenz, das Fahrerdrehmoment und die Geschwindigkeit ermittelt werden, und/oder der Arbeitspunkt abhängig von einem Typ des elektrischen Fahrrads (2) gewählt wird.

6. Steuersystem (1) gemäß Anspruch 2, **dadurch gekennzeichnet, dass** das Steuersystem (1) dazu eingerichtet ist, in der Bedienungsschnittstelle (7a) und/oder der Konfigurationsschnittstelle (7b) einen Indikator darzustellen, durch welchen Indiziert wird, ob ein Unterstützungsmodus durch einen Anwender modifizierbar ist.

7. Steuersystem (1) gemäß einem der voranstehenden Ansprüche, **dadurch gekennzeichnet, dass** die Bedieneinheit (4) dazu eingerichtet ist eine durch einen Anwender mit dem Fahrrad (2) zurückgelegte Strecke zu erfassen und

- einen bestimmten Unterstützungsmodus erst für die Auswahl bereitzustellen, wenn eine definierte Mindestfahrstrecke zurückgelegt wurde, und/oder
- eine Limitierung bei einem Konfigurieren bestehender Unterstützungsmodi aufzuheben, wenn eine definierte Mindestfahrstrecke zurückgelegt wurde.

8. Steuersystem (1) gemäß einem der voranstehenden Ansprüche, **dadurch gekennzeichnet, dass** durch das Steuersystem (1) ein Modus bereitgestellt wird, in dem eine Limitierung einer möglichen Auswahl aus den Unterstützungsmodi (21-24) über die Bedienungsschnittstelle (7a) für vordefinierte Streckenabschnitte erfolgt.

9. Steuersystem (1) gemäß einem der voranstehenden Ansprüche, **dadurch gekennzeichnet, dass** jeder der Unterstützungsmodi (21-24) bei einer Darstellung über die Bedienungsschnittstelle (7a, 7b) durch ein zugehörige Farbe gekennzeichnet ist, wobei die Bedieneinheit (4) dazu eingerichtet ist, für einen Unterstützungsmodus einen die Farbe beschreibenden Farbcode zu berechnen, wobei der Farbcode mittels einer Farbberechnungsvorschrift aus den für diesen Unterstützungsmodus hinterlegten Antriebsparametern berechnet wird.

10. Steuersystem (1) gemäß Anspruch 9, **dadurch gekennzeichnet, dass** der Farbcode eine Helligkeit und/oder einen Farbton beschreibt.

11. Steuersystem (1) gemäß einem der Ansprüche 9 und 10, **dadurch gekennzeichnet, dass** die Antriebsparameter eines Unterstützungsmodus variabel sind, und:

- der Farbcode für diesen Unterstützungsmodus kontinuierlich neu berechnet wird, wobei bei der Darstellung des Unterstützungsmodus über die Bedienungsschnittstelle (7a) die zugehörige Farbe dem Farbcode angepasst wird, und/oder
- mittels der Farbberechnungsvorschrift zwei Farbcodes berechnet werden welche eine erste Farbe und eine zweite Farbe definieren, wobei bei der Darstellung des Unterstützungsmodus über die Bedienungsschnittstelle (7a) ein Farbwechsel zwischen der ersten Farbe und der zweiten Farbe dargestellt wird.

12. Steuersystem (1) gemäß einem der Ansprüche 9 bis 11, **dadurch gekennzeichnet, dass** die Farbberechnungsvorschrift den Farbcode aus ein für den zugehörigen Unterstützungsmodus hinterlegtes maximalen Drehmoment und/oder einem für den zugehörigen Unterstützungsmodus hinterlegten Unterstützungsfaktor berechnet wird.

13. Steuersystem (1) gemäß Anspruch 2, **dadurch gekennzeichnet, dass** Werte der Antriebsparameter für einen Satz von Antriebsparametern über die Konfigurationsschnittstelle (7b) durch den Anwender konfigurierbar sind, und eine Anzahl von Charakteristikwerten (C1-C8) durch die Konfigurationsschnittstelle (7b) dargestellt wird, wobei jeder Charakteristikwert (C1-C8) ein Verhalten der Antriebsregelung des Fahrrads (2) für die für den Satz von Antriebsparametern konfigurierten Werte beschreibt.

14. Steuersystem (1) gemäß Anspruch 13, **dadurch gekennzeichnet, dass** die Charakteristikwerte (C1-C8) in Form eines Netzdiagramms (40) über die Konfigurationsschnittstelle (7b) dargestellt werden.

15. Steuersystem (1) gemäß einem der voranstehenden Ansprüche **dadurch gekennzeichnet, dass** das Steuersystem (1) ferner dazu eingerichtet ist, einen automatischen Wechsel zwischen unterschiedlichen auswählbaren Unterstützungsmodi auszuführen, damit die Antriebsregelung nach dem Wechsel basieren auf einem Satz von Antriebsparametern von dem Unterstützungsmodus erfolgt, zu dem gewechselt wurde.

16. Steuersystem (1) gemäß einem der voranstehenden Ansprüche, **dadurch gekennzeichnet, dass** das Steuersystem (1) dazu eingerichtet ist, ein Fahrverhalten eines Anwenders bei einem Betrieb des elektrischen Fahrrads (2) zu erkennen und den Satz von Antriebsparametern basierend auf dem erkannten Fahrverhalten anzupassen oder einen neuen Satz von Antriebsparametern zu erstellen.

17. Steuersystem (1) gemäß Anspruch 2, **dadurch gekennzeichnet, dass** mehrere Voreinstellungs-Profile (110, 111, 112) hinterlegt sind, wobei durch jedes der Voreinstellungs-Profile (110, 111, 112) Voreinstellungen für Antriebsparameter eines Unterstützungsmodus definiert sind,

- wobei bei dem Erstellen eines neuen Unterstützungsmodus die dem neuen Unterstützungsmodus zugehörigen Antriebsparameter gemäß den Voreinstellungen eines der hinterlegten Voreinstellungs-Profile (110, 111, 112) gesetzt werden, und/oder
- wobei bei einem Modifizieren von Antriebsparametern eines zu modifizierenden Unterstützungsmodus die dem zu modifizierenden Unterstützungsmodus zugehörigen Antriebsparametern gemäß den Voreinstellungen eines der hinterlegten Voreinstellungs-Profile (110, 111, 112) gesetzt werden.

18. Steuersystem (1) gemäß Anspruch 17, **dadurch gekennzeichnet, dass**

- eines der mehreren Voreinstellungs-Profile (110, 111, 112) basierend auf Auswahl eines Anwenders über die Konfigurationsschnittstelle (7b) gewählt wird,
- eines der mehreren Voreinstellungs-Profile (110, 111, 112) basierend auf einer Kategorie des elektrischen Fahrrads gewählt wird,
- eines der mehreren Voreinstellungs-Profile (110, 111, 112) basierend auf einem aktiven Nutzerprofil gewählt wird, und/oder
- eines der mehreren Voreinstellungs-Profile (110, 111, 112) basierend auf einem Ergebnis eines Frage und Antwort Dialog gewählt wird, wobei einem Anwender mehrere Fragen vorgegeben werden und basierend auf eingegebenen Antworten des Anwenders das Voreinstellungs-Profil gewählt wird,
- wobei das gewählte Voreinstellungs-Profil für das Erstellen des neuen Unterstützungsmodus und/oder für das Modifizieren der Antriebsparameter verwendet wird.

19. Steuersystem (1) gemäß Anspruch 17 oder 18, **dadurch gekennzeichnet, dass** eines oder mehrere Voreinstellungs-Profile (110, 111, 112) über eine Service-Schnittstelle konfigurierbar sind.

20. Steuersystem (1) gemäß einem der Ansprüche 17 bis 19, **dadurch gekennzeichnet, dass** die gemäß dem ausgewählten Voreinstellungs-Profil gesetzten Antriebsparameter in der Folge durch einen Anwender modifizierbar sind.

21. Steuersystem (1) gemäß einem der voranstehenden Ansprüche, **dadurch gekennzeichnet, dass** die Bedieneinheit (4) eine Schnittstelle zu einer Konfigurationsplattform umfasst und dazu eingerichtet ist, mehrere Sets von Antriebsparametern für eine erste Anzahl an Unterstützungsmodi über die Schnittstelle zu empfangen und zu speichern.

22. Steuersystem (1) gemäß einem der voranstehenden Ansprüche, **dadurch gekennzeichnet, dass** die Bedieneinheit (4) dazu eingerichtet ist eine Auswahl von einem Anwender zu empfangen, durch welche eine Auswahl einer zweiten Anzahl von Unterstützungsmodi aus der ersten Anzahl von Unterstützungsmodi erfolgt, und die zweite Anzahl an Unterstützungsmodi für eine Auswahl während einem Betrieb des Fahrrads (2) bereitzustellen, wobei die zweite Anzahl bevorzugt kleiner ist als die erste Anzahl.

23. Konfigurationssystem, welches das Steuersystem (1) gemäß einem der Ansprüche 21 oder 22 und eine Konfigurationsplattform umfasst, wobei die Konfigurationsplattform dazu eingerichtet ist:

- eine Auswahl von mehreren Unterstützungsmodi aus einer Vielzahl verfügbarer Unterstützungsmodi durchzuführen, um einen Pool von Unterstützungsmodi zu definieren,
- einem Anwender eine Auswahl von mehreren Unterstützungsmodi aus dem Pool von Unterstützungsmodi zu ermöglichen, und
- die aus dem Pool von Unterstützungsmodi ausgewählten Unterstützungsmodi mit den diesen Unterstützungsmodi zugehörigen Antriebsparametern über eine Schnittstelle als eine erste Anzahl von Unterstützungsmodi auf die Bedieneinheit (4) des Steuersystems zu übertragen.

## Claims

1. Control system (1) for an electric bicycle (2) comprising an operating unit (4) which is set up to control a driving controller (3) of the electric bicycle (2),

- wherein the operating unit (4) is set up to allow a user to select between a plurality of support modes (21-24) via an operating interface (7a), and
- to control the driving controller (3) in such a way that drive control for a motor (11) of the bicycle (2) is carried out in accordance with the selected support mode,

**characterized in that** the operating unit (4) is set up

- to calculate a characteristic number (31-34) for each support mode (21-24) by means of a characteristic number calculation rule based on the drive parameters stored for the respective support mode (21-24) and to carry out sorting of the support modes (21-24) based on the characteristic numbers (31-34) calculated for the support modes (21-24), or
- to provide, for each support mode (21-24), the drive parameters stored for the respective support mode (21-24) via an interface, to receive a characteristic number (31-34) via the interface and to carry out sorting of the support modes (21-24) based on the characteristic numbers (31-34) received for the support modes (21-24).

2. Control system (1) according to Claim 1, **characterized in that** the control system (1) comprises a configuration interface (7b) which allows a user to modify drive parameters and/or to create new support modes.

3. Control system (1) according to Claim 1, **characterized in that** the characteristic number (31-34) is calculated in accordance with the characteristic number calculation rule from a maximum torque stored for the associated support mode (21-24) and/or a support factor stored for the associated support mode (21-24).

4. Control system (1) according to Claim 3, **characterized in that** the maximum torque and/or the support factor for calculating the characteristic number (31-34) for each of the support modes (21-24) are ascertained for a common operating point, wherein the common operating point is preferably defined by one or more of the following variables: a pedalling rate, a driver torque, a speed.

5. Control system (1) according to Claim 4, **characterized in that**, for ascertaining the operating point, preferred values of a user for the pedalling rate, the driver torque and the speed are ascertained, and/or the operating point is selected depending on a type of the electric bicycle (2).

6. Control system (1) according to Claim 2, **characterized in that** the control system (1) is set up to display an indicator in the operating interface (7a) and/or the configuration interface (7b), which indicator indicates whether a support mode is able to be modified by a user.

7. Control system (1) according to one of the preceding claims, **characterized in that** the operating unit (4) is set up to measure a distance travelled by a user with the bicycle (2) and

- to provide a specific support mode for the selection only when a defined minimum driving distance has been travelled, and/or
- to lift a limitation for configuring existing support modes when a defined minimum driving distance has been travelled.

8. Control system (1) according to one of the preceding claims, **characterized in that** the control system (1) provides a mode in which a limitation on a possible selection from the support modes (21-24) via the operating interface (7a) is carried out for predefined road sections.

9. Control system (1) according to one of the preceding claims, **characterized in that** each of the support modes (21-24) is **characterized by** an associated colour when displayed via the operating interface (7a, 7b), wherein the operating unit (4) is set up to calculate, for a support mode, a colour code describing the colour, wherein the colour code is calculated by means of a colour calculation rule from the drive parameters stored for this support mode.

10. Control system (1) according to Claim 9, **characterized in that** the colour code describes a brightness and/or a colour tone.

11. Control system (1) according to either of Claims 9 and 10, **characterized in that** the drive parameters of a support mode are variable, and:

- the colour code for this support mode is continuously recalculated, wherein the associated colour is adapted in line with the colour code when displaying the support mode via the operating interface (7a), and/or
- two colour codes are calculated by means of the colour calculation rule, which colour codes define a first colour and a second colour, wherein a colour change between the first colour and the second colour is displayed when displaying the support mode via the operating interface (7a).

12. Control system (1) according to one of Claims 9 to 11, **characterized in that** the colour calculation rule calculates the colour code from a maximum torque stored for the associated support mode and/or a support factor stored for the associated support mode.

13. Control system (1) according to Claim 2, **characterized in that** values of the drive parameters for a set of drive parameters are able to be configured by the user via the configuration interface (7b), and
a number of characteristic values (C1-C8) are displayed by the configuration interface (7b), wherein each characteristic value (C1-C8) describes a behaviour of the drive control of the bicycle (2) for the values configured for the set of drive parameters.

14. Control system (1) according to Claim 13, **characterized in that** the characteristic values (C1-C8) are displayed in the form of a radar chart (40) via the configuration interface (7b).

15. Control system (1) according to one of the preceding claims, **characterized in that** the control system (1) is further set up to carry out an automatic change between different selectable support modes so that the drive control after the change is carried out based on a set of drive parameters from the support mode to which the change was made.

16. Control system (1) according to one of the preceding claims, **characterized in that** the control system (1) is set up to recognize a driving behaviour of a user during operation of the electric bicycle (2) and to adapt the set of drive parameters on the basis of the recognized driving behaviour or to create a new set of drive parameters.

17. Control system (1) according to Claim 2, **characterized in that** a plurality of default profiles (110, 111, 112) are stored, wherein each of the default profiles (110, 111, 112) defines defaults for drive parameters of a support mode,

- wherein, when creating a new support mode, the drive parameters associated with the new support mode are set in accordance with the defaults of one of the stored default profiles (110, 111, 112), and/or
- wherein, when modifying drive parameters of a support mode that is to be modified, the drive parameters associated with the support mode that is to be modified are set in accordance with the defaults of one of the stored default profiles (110, 111, 112).

18. Control system (1) according to Claim 17, **characterized in that**

- one of the plurality of default profiles (110, 111, 112) is selected based on selection of a user via the configuration interface (7b),
- one of the plurality of default profiles (110, 111, 112) is selected based on a category of the electric bicycle,
- one of the plurality of default profiles (110, 111, 112) is selected based on an active user profile, and/or
- one of the plurality of default profiles (110, 111, 112) is selected based on a result of a question-and-answer dialogue, wherein a plurality of questions are posed to a user and the default profile is selected based on answers entered by the user,
- wherein the selected default profile is used to create the new support mode and/or to modify the drive parameters.

19. Control system (1) according to Claim 17 or 18, **characterized in that** one or more default profiles (110, 111, 112) are able to be configured via a service interface.

20. Control system (1) according to one of Claims 17 to 19, **characterized in that** the drive parameters set in accordance with the selected default profile are able to be subsequently modified by a user.

21. Control system (1) according to one of the preceding claims, **characterized in that** the operating unit (4) comprises an interface to a configuration platform and is set up to receive and to store a plurality of sets of drive parameters for a first number of support modes via the interface.

22. Control system (1) according to one of the preceding claims, **characterized in that** the operating unit (4) is set up to receive a selection from a user, through which a selection of a second number of support modes from the first number of support modes is made, and to provide the second number of support modes for selection during operation of the bicycle (2), wherein the second number is preferably smaller than the first number.

23. Configuration system which comprises the control system (1) according to either of Claims 21 and 22 and a configuration platform, wherein the configuration platform is set up:

- to carry out a selection of a plurality of support modes from a multiplicity of available support modes in order to define a pool of support modes,
- to allow a user to select a plurality of support modes from the pool of support modes, and
- to transfer the support modes selected from the pool of support modes with the drive parameters associated with these support modes via an interface as a first number of support modes to the operating unit (4) of the control system.

**Revendications**

1. Système de commande (1) pour une bicyclette électrique (2), comprenant une unité de commande (4) qui est conçue pour commander un dispositif de commande de conduite (3) de la bicyclette électrique (2),

- l'unité de commande (4) étant conçue pour permettre à un utilisateur d'effectuer une sélection parmi une pluralité de modes d'assistance (21-24) par l'intermédiaire d'une interface de fonctionnement (7a), et
- pour commander le dispositif de commande de conduite (3) de telle sorte qu'une commande d'entraînement pour un moteur (11) de la bicyclette (2) soit effectuée selon le mode d'assistance sélectionné,

**caractérisé en ce que** l'unité de commande (4) est conçue pour

- calculer, pour chaque mode d'assistance (21-24), une valeur caractéristique (31-34) au moyen d'une règle de calcul de valeur caractéristique basée sur les paramètres d'entraînement enregistrés pour le mode d'assistance (21-24) respectif, et effectuer un classement des modes d'assistance (21-24) sur la base des valeurs caractéristiques (31-34) calculées pour les modes d'assistance (21-24), ou
- fournir, pour chaque mode d'assistance (21-24), les paramètres d'entraînement enregistrés pour le mode d'assistance (21-24) respectif par l'intermédiaire d'une interface, recevoir une valeur caractéristique (31-34) par l'intermédiaire de l'interface, et effectuer un classement des modes d'assistance (21-24) sur la base des valeurs caractéristiques (31-34) reçues pour les modes d'assistance (21-24).

2. Système de commande (1) selon la revendication 1, **caractérisé en ce que** le système de commande (1) comprend une interface de configuration (7b) qui permet à un utilisateur de modifier des paramètres d'entraînement et/ou de créer de nouveaux modes d'assistance.

3. Système de commande (1) selon la revendication 1, **caractérisé en ce que** la valeur caractéristique (31-34) est calculée, selon la règle de calcul de valeur caractéristique, à partir d'un couple maximal enregistré pour le mode d'assistance (21-24) associé et/ou d'un facteur d'assistance enregistré pour le mode d'assistance (21-24) associé.

4. Système de commande (1) selon la revendication 3, **caractérisé en ce que** le couple maximal et/ou le facteur d'assistance pour le calcul de la valeur caractéristique (31-34) pour chacun des modes d'assistance (21-24) sont déterminés pour un point de fonctionnement commun, le point de fonctionnement commun étant de préférence défini par une ou plusieurs des grandeurs suivantes : une fréquence de pédalage, un couple exercé par le cycliste, une vitesse.

5. Système de commande (1) selon la revendication 4, **caractérisé en ce que**, pour une détermination du point de fonctionnement, des valeurs préférées d'un utilisateur pour la fréquence de pédalage, le couple exercé par le cycliste et la vitesse sont déterminées, et/ou le point de fonctionnement est sélectionné en fonction d'un type de la bicyclette électrique (2).

6. Système de commande (1) selon la revendication 2, **caractérisé en ce que** le système de commande (1) est conçu pour afficher, dans l'interface de fonctionnement (7a) et/ou l'interface de configuration (7b), un indicateur par l'intermédiaire duquel il est indiqué si un mode d'assistance est modifiable par un utilisateur.

7. Système de commande (1) selon l'une des revendications précédentes, **caractérisé en ce que** l'unité de commande (4) est conçue pour détecter une distance parcourue par un utilisateur avec la bicyclette (2) et

- pour ne fournir un mode d'assistance déterminé pour la sélection que lorsqu'une distance minimale définie a été parcourue, et/ou
- pour lever une limitation lors de la configuration de modes d'assistance existants lorsqu'une distance minimale définie a été parcourue.

8. Système de commande (1) selon l'une des revendications précédentes, **caractérisé en ce que** le système de commande (1) fournit un mode dans lequel une limitation de la sélection possible parmi les modes d'assistance (21-24) par l'intermédiaire de l'interface de fonctionnement (7a) est appliquée pour des sections de parcours prédéfinies.

9. Système de commande (1) selon l'une des revendications précédentes, **caractérisé en ce que** chacun des modes d'assistance (21-24), lors d'une représentation par l'intermédiaire de l'interface de fonctionnement (7a, 7b), est identifié par une couleur associée, l'unité de commande (4) étant conçue pour calculer, pour un mode d'assistance, un code de couleur décrivant la couleur, le code de couleur étant calculé au moyen d'une règle de calcul de couleur à partir des paramètres d'entraînement enregistrés pour ce mode d'assistance.

10. Système de commande (1) selon la revendication 9, **caractérisé en ce que** le code de couleur décrit une luminosité et/ou une teinte.

11. Système de commande (1) selon l'une des revendications 9 et 10, **caractérisé en ce que** les paramètres d'entraînement d'un mode d'assistance sont variables, et :

- le code de couleur pour ce mode d'assistance est recalculé en continu, la couleur associée étant adaptée au code de couleur lors de la représentation du mode d'assistance par l'intermédiaire de l'interface de fonctionnement (7a), et/ou
- deux codes de couleur sont calculés au moyen de la règle de calcul de couleur, lesquels définissent une première couleur et une deuxième couleur, un changement de couleur entre la première couleur et la deuxième couleur étant représenté lors de la présentation du mode d'assistance par l'intermédiaire de l'interface de fonctionnement (7a).

12. Système de commande (1) selon l'une des revendications 9 à 11, **caractérisé en ce que** la règle de calcul de couleur calcule le code de couleur à partir d'un couple maximal enregistré pour le mode d'assistance associé et/ou d'un facteur d'assistance enregistré pour le mode d'assistance associé.

13. Système de commande (1) selon la revendication 2, **caractérisé en ce que** les valeurs des paramètres d'entraînement pour un ensemble de paramètres d'entraînement sont configurables par l'utilisateur par l'intermédiaire de l'interface de configuration (7b), et
un nombre de valeurs caractéristiques (C1-C8) est représenté par l'intermédiaire de l'interface de configuration (7b), chaque valeur caractéristique (C1-C8) décrivant un comportement de la commande d'entraînement de la bicyclette (2) pour les valeurs configurées pour l'ensemble de paramètres d'entraînement.

14. Système de commande (1) selon la revendication 13, **caractérisé en ce que** les valeurs caractéristiques (C1-C8) sont représentées sous la forme d'un diagramme radar (40) par l'intermédiaire de l'interface de configuration (7b).

15. Système de commande (1) selon l'une des revendications précédentes, **caractérisé en ce que** le système de commande (1) est en outre conçu pour effectuer un changement automatique entre différents modes d'assistance sélectionnables, de sorte que la commande d'entraînement, après le changement, soit basée sur un ensemble de paramètres d'entraînement du mode d'assistance vers lequel le changement a été effectué.

16. Système de commande (1) selon l'une des revendications précédentes, **caractérisé en ce que** le système de commande (1) est conçu pour reconnaître un comportement de conduite d'un utilisateur lors de l'utilisation de la bicyclette électrique (2) et pour ajuster l'ensemble de paramètres d'entraînement sur la base du comportement de conduite reconnu ou pour créer un nouvel ensemble de paramètres d'entraînement.

**17.** Système de commande (1) selon la revendication 2, **caractérisé en ce que** plusieurs profils de préréglage (110, 111, 112) sont enregistrés, chacun des profils de préréglage (110, 111, 112) définissant des préréglages pour les paramètres d'entraînement d'un mode d'assistance,

    - dans lequel, lors de la création d'un nouveau mode d'assistance, les paramètres d'entraînement associés au nouveau mode d'assistance, sont réglés selon les préréglages de l'un des profils de préréglage enregistrés (110, 111, 112), et/ou

    - dans lequel, lors d'une modification de paramètres d'entraînement d'un mode d'assistance à modifier, les paramètres d'entraînement associés au mode d'assistance à modifier sont réglés selon les préréglages de l'un des profils de préréglage enregistrés (110, 111, 112).

**18.** Système de commande (1) selon la revendication 17, **caractérisé en ce que**

    - l'un des plusieurs profils de préréglage (110, 111, 112) est sélectionné sur la base de la sélection d'un utilisateur par l'intermédiaire de l'interface de configuration (7b),

    - l'un des plusieurs profils de préréglage (110, 111, 112) est sélectionné sur la base d'une catégorie de la bicyclette électrique,

    - l'un des plusieurs profils de préréglage (110, 111, 112) est sélectionné sur la base d'un profil utilisateur actif, et/ou

    - l'un des plusieurs profils de préréglage (110, 111, 112) est sélectionné sur la base d'un résultat d'un dialogue de questions-réponses, plusieurs questions étant posées à un utilisateur et le profil de préréglage étant sélectionné sur la base des réponses saisies par l'utilisateur,

    - le profil de préréglage sélectionné étant utilisé pour la création du nouveau mode d'assistance et/ou pour la modification des paramètres d'entraînement.

**19.** Système de commande (1) selon la revendication 17 ou 18, **caractérisé en ce qu'**un ou plusieurs profils de préréglage (110, 111, 112) sont configurables par l'intermédiaire d'une interface de service.

**20.** Système de commande (1) selon l'une des revendications 17 à 19, **caractérisé en ce que** les paramètres d'entraînement réglés selon le profil de préréglage sélectionné peuvent ensuite être modifiés par un utilisateur.

**21.** Système de commande (1) selon l'une des revendications précédentes, **caractérisé en ce que** l'unité de commande (4) comprend une interface avec une plateforme de configuration et est conçue pour recevoir et stocker plusieurs ensembles de paramètres d'entraînement pour un premier nombre de modes d'assistance par l'intermédiaire de cette interface.

**22.** Système de commande (1) selon l'une des revendications précédentes, **caractérisé en ce que** l'unité de commande (4) est conçue pour recevoir une sélection d'un utilisateur, au moyen de laquelle une sélection d'un deuxième nombre de modes d'assistance est effectuée parmi le premier nombre de modes d'assistance, et pour fournir le deuxième nombre de modes d'assistance pour une sélection pendant l'utilisation de la bicyclette (2), le deuxième nombre étant de préférence inférieur au premier nombre.

**23.** Système de configuration, comprenant le système de commande (1) selon l'une des revendications 21 ou 22 et une plateforme de configuration, la plateforme de configuration étant conçue pour :

    - effectuer une sélection de plusieurs modes d'assistance parmi une pluralité de modes d'assistance disponibles afin de définir un groupe de modes d'assistance,

    - permettre à un utilisateur de sélectionner plusieurs modes d'assistance dans ce groupe de modes d'assistance, et

    - transmettre à l'unité de commande (4) du système de commande, par l'intermédiaire d'une interface, les modes d'assistance sélectionnés dans ce groupe, avec les paramètres d'entraînement associés à ces modes d'assistance, en tant que premier nombre de modes d'assistance.

FIG. 1

**FIG. 2**

**FIG. 3**

40

FIG. 4

**FIG. 5**

**FIG. 6**

**FIG. 7**

EP 4 392 318 B1

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020204201 A1
- DE 202019101294 U1
- DE 102019106585 A1
- US 2016016638 A1
- DE 102018109272 A1